# EUROPÄISCHE PATENTSCHRIFT

(11) **EP 4 154 988 B1**
(45) Veröffentlichungstag und Bekanntmachung des Hinweises auf die Patenterteilung: **03.07.2024**
(21) Anmeldenummer: 22211192.4
(22) Anmeldetag: 02.12.2022
(51) Int. Cl.: B05B 14/00

(54) **REINIGUNGSVORRICHTUNG FÜR EIN MIT BESCHICHTUNGSMITTELRESTEN VERUNREINIGTES TRANSPORTBAND, BESCHICHTUNGSVORRICHTUNG, VERFAHREN ZUM REINIGEN EINES MIT BESCHICHTUNGSMITTELRESTEN VERUNREINIGTEN TRANSPORTBANDES**
CLEANING DEVICE FOR A CONVEYOR BELT CONTAMINATED WITH COATING AGENT REMNANTS, COATING DEVICE, METHOD FOR CLEANING A CONVEYOR BELT CONTAMINATED WITH COATING AGENT REMNANTS
DISPOSITIF DE NETTOYAGE POUR UNE BANDE TRANSPORTEUSE CONTAMINÉE PAR DES RÉSIDUS DE PRODUIT DE REVÊTEMENT, DISPOSITIF DE REVÊTEMENT, PROCÉDÉ DE NETTOYAGE D'UNE BANDE TRANSPORTEUSE CONTAMINÉE PAR DES RÉSIDUS DE PRODUIT DE REVÊTEMENT

(30) Priorität: 28.12.2021 DE 102021006373
(43) Veröffentlichungstag der Anmeldung: 29.03.2023
(73) Patentinhaber: Robert Bürkle GmbH, 72250 Freudenstadt (DE)
(72) Erfinder: SCHEERER, Marcel, 72250 Freudenstadt (DE); HOFFER, Michael, 72290 Loßburg (DE); BRÜMMERSTÄDT, Martin, 72275 Alpirsbach (DE)
(74) Vertreter: LBP Lemcke, Brommer & Partner Patentanwälte mbB

(56) Entgegenhaltungen:
- EP-A1- 0 266 627
- EP-A1- 1 964 795
- CN-B- 107 855 249
- GB-A- 2 484 575
- US-A1- 2001 023 814
- US-A1- 2010 243 410

## Beschreibung

Die Erfindung betrifft eine Reinigungsvorrichtung für ein mit Beschichtungsmittelresten verunreinigtes Transportband gemäß dem Oberbegriff des Anspruchs 1, eine Beschichtungsvorrichtung nach dem Oberbegriff des Anspruchs 14 sowie ein Verfahren nach dem Oberbegriff des Anspruchs 15.

Zur Verbesserung der Oberflächeneigenschaften eines Holzwerkstücks, beispielsweise eines Möbelteils, kann dieses während oder nach seiner Herstellung mit Beschichtungsmittel versehen werden. Bei dem Beschichtungsmittel kann es sich beispielsweise um Lack, Farbe oder etwa Beize handeln.

Zur Beschichtung kommen Beschichtungsvorrichtungen zum Einsatz, bei denen das Werkstück mit Hilfe eines Transportbandes gefördert wird und währenddessen mittels einer Mehrzahl an Sprüheinheiten mit dem Beschichtungsmittel versehen wird. Hierbei ist es gewünscht, sowohl die zu den Sprüheinheiten gewandte Oberfläche des Werkstückes als auch seine Seitenkanten zu beschichten.

Während des Beschichtungsvorganges kann nicht vermieden werden, dass das Transportband mit Beschichtungsmittelresten verunreinigt wird. Damit die Beschichtungsmittelreste nicht auf dem Transportband antrocknen und es dadurch beschädigen, ist es gewünscht, das Transportband nach dem Beschichtungsvorgang reinigen und von den Beschichtungsmittelresten befreien zu können.

Aus der EP 2 537 595 B1 ist eine Reinigungsvorrichtung für ein mit Beschichtungsmittelresten verunreinigtes Transportband bekannt. Diese Reinigungsvorrichtung umfasst eine Walze, deren Mantel für einen reibenden Kontakt mit dem Transportband vorgesehen ist. Durch eine Relativbewegung zwischen dem Mantel der Walze und dem Transportband werden die auf dem Transportband befindlichen Beschichtungsmittelreste mittels der Walze abgestreift. Eine Rakel ist auf einer dem Transportband abgewandten Seite der Walze angeordnet und steht mit dem Mantel der Walze in mechanischem, reibenden Kontakt. Die Rakel dient dazu, die auf der Walze befindlichen Beschichtungsmittelreste abzustreifen und auf ein Reinigungsband zu leiten. Das Reinigungsband ist als ein endlos umlaufendes Band mit einem Untertrum und einem Obertrum ausgestaltet. Die auf das Reinigungsband gegebene Menge an Beschichtungsmittel wird mittels einer Förderbewegung des Reinigungsbandes zu einem stirnseitigen Bereich der Reinigungswalze gefördert und kann dort gesammelt werden.

Bei der aus EP 2 537 595 B1 bekannten Reinigungsvorrichtung muss dauerhaft sichergestellt werden, dass zwischen der Rakel und der Walze ein gleichmäßiger und hoher Anpressdruck herrscht. Zudem muss sichergestellt werden, dass zwischen dem Transportband und der Walze eine hohe Differenzgeschwindigkeit in dem gemeinsamen mechanischen Kontakt vorliegt. Hierbei ist es jedoch problematisch, dass die Rakel und die Walze infolge des hohen Anpressdruckes und der hohen Differenzgeschwindigkeit mechanisch stark beansprucht und daher starkem Verschleiß unterworfen sind. Dies ist insbesondere nachteilig, da der Austausch des Transportbandes in der Beschichtungsvorrichtung sehr kostenintensiv und aufwändig sein kann.

Im verschlissenen Zustand kann mittels der Rakel auch bei hohem Anpressdruck und hoher Differenzgeschwindigkeit nur eine vergleichsweise geringe Menge an Beschichtungsmittel von der Walze abgestreift werden. Die nicht abgestreifte Menge an Beschichtungsmittelresten verbleibt hierbei auf der Walze und gelangt erneut auf das Transportband. Dies ist zum einen deshalb problematisch, da der gewünschte Reinigungseffekt an dem Transportband nicht dauerhaft erzielt werden kann. Zum anderen liegen die Beschichtungsmittelreste auf der Walze typischerweise ungleichmäßig verteilt vor. Dementsprechend kommt es zu einer ungleichmäßigen Reibung zwischen Walze und Transportband, wodurch sowohl der Verschleiß der Komponenten der Reinigungsvorrichtung als auch des Transportbandes erhöht ist.

In der EP-A-1 964 795 ist vorgeschlagen worden, bei einer solchen Reinigungsvorrichtung zum Abstreifen von angelöstem Beschichtungsmittel von der Walze anstatt der Rakel das Reinigungsband zu verwenden. Hierfür steht das Reinigungsband mit seinem Obertrum in reibendem Kontakt mit der Walze und bewegt sich in einem spitzen Winkel zu deren Längsachse, um die Funktion der Rakel zu übernehmen. Um die Walze mit Lösemittel zu versehen, wird zwischen der Walze und einer Dosierwalze außerdem ein Dosierspalt gebildet, in den Lösemittel gegeben wird und aus dem die Walze Lösemittel entnimmt.

Der Erfindung liegt die Aufgabe zugrunde, eine Reinigungsvorrichtung der eingangs genannten Art, eine Beschichtungsvorrichtung mit einer solchen Reinigungsvorrichtung sowie ein Verfahren vorzuschlagen, mittels derer ein mit Beschichtungsmittelresten verunreinigtes Transportband zuverlässig gereinigt werden kann und der Verschleiß der hierbei verwendeten Komponenten reduziert ist.

Die Aufgabe wird gelöst mittels einer Reinigungsvorrichtung gemäß Anspruch 1. Vorteilhafte Weiterbildungen finden sich in den abhängigen Unteransprüchen. Die Aufgabe wird außerdem gelöst mittels einer Beschichtungsvorrichtung gemäß Anspruch 14 und einem Verfahren gemäß Anspruch 15.

Die erfindungsgemäße Reinigungsvorrichtung ist für ein mit Beschichtungsmittelresten verunreinigtes, endlos umlaufendes Transportband gedacht und weist in an sich bekannter Weise mindestens eine erste Walze auf, welche dazu vorgesehen ist, so unterhalb des Transportbandes angeordnet zu werden, dass ihr Mantel in Kontakt mit einem Untertrum des Transportbands steht. Ein ebenfalls endlos umlaufendes Reinigungsband ist unterhalb der ersten Walze angeordnet.

Der Mantel der ersten Walze steht in Kontakt mit einem Obertrum des Reinigungsbandes. Hierbei weist das Reinigungsband bei einer Förderbewegung an dem Obertrum eine Hauptförderrichtung auf. Das Reinigungsband ist derart angeordnet, dass es mit der Hauptförderrichtung gegenüber einer Längsachse der ersten Walze schräggestellt ist. Am Reinigungsband und/oder oberhalb des Reinigungsbandes ist zudem zumindest eine erste Ausgabevorrichtung vorgesehen, um ein erstes Lösemittel derart auf das Reinigungsband aufzugeben, dass es mittels der Förderbewegung des Reinigungsbandes entlang der Hauptförderrichtung in einen Bereich gefördert wird, in welchem das Reinigungsband mit der ersten Walze in Kontakt steht. Die erste Walze ist dabei derart ausgebildet und angeordnet, dass sie mittels einer Rotationsbewegung das auf dem Reinigungsband befindliche erste Lösemittel zumindest teilweise aufnimmt und an das Transportband abgibt.

Die Erfindung beruht zunächst auf der Erkenntnis, dass das Reinigungsband mit dem Mantel der ersten Walze in Kontakt, insbesondere reibenden Kontakt, gebracht werden kann, um Beschichtungsmittelreste, die sich auf der ersten Walze befinden, aufzunehmen und in Hauptförderrichtung abführen zu können. Im Vergleich zu einer Rakel erfolgt der Abtrag der Beschichtungsmittelreste von der ersten Walze schonender, sodass diese einem geringeren Verschleiß unterworfen ist. Insbesondere können die Materialien, aus denen der Mantel der ersten Walze und/oder das Reinigungsband bestehen oder mit denen sie beschichtet sind, derart gewählt sein, um die Reibung zwischen der ersten Walze und dem Reinigungsband bedarfsgemäß einstellen zu können.

Es ist zudem eine weitere Erkenntnis, dass das Reinigungsband nicht alleine dazu genutzt werden kann, um die von der ersten Walze aufgenommenen Beschichtungsmittelerste aufzunehmen und abzuführen zu können. Vielmehr kann das Reinigungsband auch der Zufuhr von Lösemittel dienen, welches auf dem Mantel der ersten Walze aufgenommen und an das Transportband abgegeben werden kann. Bei der erfindungsgemäßen Reinigungsvorrichtung liegt somit insgesamt ein hohes Maß an Funktionsintegration vor, da das Reinigungsband gleich mehrere Funktionen erfüllt. Dadurch ergibt sich ein einfacher Aufbau der Reinigungsvorrichtung.

Mittels der erfindungsgemäßen Reinigungsvorrichtung ist es möglich, das Transportband mit bedarfsweise großen Mengen an erstem Lösemittel zu versehen, wodurch die darauf befindlichen Beschichtungsmittelreste angelöst werden können. Bevorzugt weist das erste Lösemittel eine schmierende Wirkung auf, wodurch die Reibung zwischen der ersten Walze und dem Transportband verringert werden kann. Dadurch lässt sich zum einen also eine gute Reinigungswirkung erzielen. Zum anderen lässt sich der Verschleiß der ersten Walze und des Transportbandes weiter verringern, wodurch die gute Reinigungswirkung auch dauerhaft sichergestellt werden kann.

Das Transportband ist in an sich bekannter Weise als endlos umlaufendes und vorzugsweise elastisches Band ausgestaltet, welches mittels einer Mehrzahl an Umlenkrollen geführt und angetrieben sein kann. Insbesondere weist das Transportband neben dem Untertrum auch ein Obertrum auf.

Die erste Walze der Reinigungsvorrichtung ist insbesondere dafür vorgesehen, um derart gegenüber dem Transportband angeordnet zu werden, dass ihre Längsachse im Wesentlichen orthogonal zu einer Translationsrichtung des Transportbandes im Bereich des Untertrums orientiert ist. Es liegt jedoch auch im Rahmen der Erfindung, dass die erste Walze mit Ihrer Längsachse gegenüber der Translationsrichtung des Transportbandes im Bereich des Untertrums schräggestellt sein kann, also in einem Winkel zwischen 0 und 90 Grad.

Die erste Walze kann einen zylindrischen Stahlkern und vorzugsweise einen verchromten Mantel umfassen. Ebenso ist eine Keramikbeschichtung am Mantel der ersten Walze denkbar. Alternativ kann der Stahlkern mit einer Gummischicht ummantelt sein. Bei der Gummischicht kann es sich um eine antistatische Gummischicht handeln, mit der eine statische Aufladung der ersten Walze gegenüber dem Transportband verhindert werden kann.

Das Reinigungsband ist ebenfalls als ein endlos umlaufendes und vorzugsweise elastisches Band ausgestaltet und weist dabei neben dem Obertrum insbesondere auch ein Untertrum auf. Das Reinigungsband kann mindestens zwei Umlenkrollen aufweisen, von denen zumindest eine Umlenkrolle mittels eines Reinigungsbandantriebes in Bewegung versetzt werden kann, um das Reinigungsband anzutreiben. Dadurch lässt sich die Förderbewegung mit der Hauptförderrichtung an dem Obertrum einstellen.

Erfindungsgemäß ist das Reinigungsband mit seiner Hauptförderrichtung an dem Obertrum gegenüber der Längsachse der ersten Walze schräggestellt, sodass die Hauptförderrichtung und die Längsachse also einen Winkel einschlie-βen, der betraglich zwischen 0 und 90 Grad liegt. Das heißt, dass die Hauptförderrichtung nicht orthogonal zur Längsachse der ersten Walze gerichtet ist und auch nicht parallel zu dieser verläuft. Gegenüber einer parallelen Ausrichtung zwischen der Hauptförderrichtung des Reinigungsbandes an dem Obertrum und der Längsachse der ersten Walze können diese beispielsweise einen Winkel von +5 Grad oder -5 Grad einschließen.

Vorzugsweise ist die Reinigungsvorrichtung dazu vorgesehen, derart gegenüber dem Transportband angeordnet zu werden, dass das Reinigungsband im Bereich seines Obertrums im Wesentlichen planparallel beabstandet zu dem Transportband im Bereich seines Untertrums ist. Insbesondere ist der Bereich des Obertrums des Reinigungsbandes horizontal ausgerichtet. Dadurch ist es möglich, das erste Lösemittel derart auf das Reinigungsband zu geben, dass es im Wesentlichen entsprechend der Hauptförderrichtung der ersten Walze zugeführt werden kann. Insbesondere wird das Lösemittel dabei nicht etwa infolge von Schwerkraftwirkung und einer Neigung des Reinigungsbandes quer zu der Hauptförderrichtung abgelenkt. Dadurch lässt sich die erste Walze auf zuverlässige Weise mit Lösemittel versehen.

Die erste Ausgabevorrichtung dient erfindungsgemäß dazu, das erste Lösemittel auf das Reinigungsband zu geben. Bei dem ersten Lösemittel kann es sich um ein flüssiges Medium handeln, welches eine lösende Wirkung für die auf dem Transportband befindlichen Beschichtungsmittelreste hat und zudem gleichzeitig eine schmierende, also reibungsmindernde Wirkung für den vorgesehenen Kontakt zwischen der ersten Walze und dem Transportband hat. Insbesondere kann es sich bei dem ersten Lösemittel ein Spülmittel oder ein Reinigungsmittel umfassen oder im Wesentlichen aus Spülmittel oder Reinigungsmittel bestehen. Es kann sich hierbei auch um ein wiederverwendetes Lösemittel handeln, welches mit Beschichtungsmittelresten versetzt ist und dennoch eine reinigende Wirkung für das Transportband haben kann. Hierbei können die Beschichtungsmittelreste in dem ersten Lösemittel gelöst vorliegen.

In einer einfachen Ausführungsform kann die erste Ausgabevorrichtung ein fluidführendes Ausgabeelement mit einer Ausgabeöffnung umfassen. Bevorzugt ist das Ausgabeelement als hohlzylindrisches Rohrstück ausgestaltet und dabei derart gegenüber dem Reinigungsband positioniert, um bei Ausgabe des ersten Lösemittels infolge der Förderbewegung des Reinigungsbandes eine Lösemittelbahn auf dem Obertrum des Reinigungsbandes einzustellen. Vorzugsweise ist die Lösemittelbahn dabei im Wesentlichen entsprechend der Hauptförderrichtung des Reinigungsbandes orientiert und erstreckt sich zwischen der Ausgabevorrichtung und dem Bereich, in dem die erste Walze mit dem Reinigungsband in Kontakt steht.

Mittels der Förderbewegung des Reinigungsbandes wird das auf das Reinigungsband gegebene erste Lösemittel in den Bereich gefördert, in dem die erste Walze und das Reinigungsband in Kontakt stehen. Infolge der Rotationsbewegung der ersten Walze und der Förderbewegung des Reinigungsbandes können sich die erste Walze und das Reinigungsband zumindest zeitweise in einem reibenden Kontakt zueinander befinden.

Bevorzugt weist die Reinigungsvorrichtung einen Walzenantrieb auf, welcher dazu ausgebildet ist, die erste Walze in die Rotationsbewegung zu versetzten. Die Erfindung ist hinsichtlich der Rotationsbewegung nicht auf einen Drehsinn der ersten Walze beschränkt. Insbesondere ist der Drehsinn der Rotationsbewegung der ersten Walze unabhängig von der Hauptförderrichtung des Reinigungsbandes einstellbar, um wie gewünscht, das erste Lösemittel aufzunehmen und an das Transportband abgeben zu können. Es liegt daher im Rahmen der Erfindung, dass die erste Walze bei der Rotationsbewegung im Bereich des Kontaktes zu dem Reinigungsband an ihrem Mantel eine oberflächliche Tangentialgeschwindigkeit aufweist, welche zumindest anteilig in oder entgegen der Hauptförderrichtung des Reinigungsbandes gerichtet ist.

Bei einer Ausgestaltung, bei der die oberflächliche Tangentialgeschwindigkeit der ersten Walze zumindest anteilig entgegen der Hauptförderrichtung des Reinigungsbandes gerichtet ist, kann das erste Lösemittel in einer gegenläufigen Bewegung von dem Reinigungsband auf dem Mantel der ersten Walze aufgenommen und infolge der Rotationsbewegung der ersten Walze an das Transportband gegeben werden. Bevorzugt erfolgt in einem Bereich zwischen dem Reinigungsband und dem Transportband kein weiterer Lösemittelauftrag auf die erste Walze.

Bei einer Ausgestaltung, bei der die oberflächliche Tangentialgeschwindigkeit der ersten Walze zumindest anteilig in die Hauptförderrichtung des Reinigungsbandes gerichtet ist, kann das erste Lösemittel zunächst zwischen der ersten Walze und dem Reinigungsband hindurch gefördert werden und daraufhin mittels der Rotationsbewegung der ersten Walze an das Transportband gegeben werden. Hierfür kann die erste Walze und das Reinigungsband derart zueinander positioniert sein, dass der Bereich, in welchem die erste Walze und das Reinigungsband in Kontakt stehen, nicht dichtend, also stoffdurchlässig ausgestaltet ist. Dies kann beispielsweise in Abhängigkeit einer Anpresskraft zwischen der ersten Walze und dem Reinigungsband realisiert sein, welche derart einstellbar ist, um eine Durchlässigkeit des ersten Lösemittels in dem Bereich des reibenden Kontaktes zu begünstigen. Zusätzlich oder alternativ kann die erste Walze an ihrem Mantel und/oder das Reinigungsband an seiner Oberfläche derart beschichtet sein, dass die oben erläuterte Stoffdurchlässigkeit in dem gemeinsamen Kontakt eingestellt oder zumindest begünstigt ist. Bei einer gleichläufigen Rotationsbewegung der ersten Walze gegenüber der Hauptförderrichtung des Reinigungsbandes kann das erste Lösemittel zu beiden Seiten des Kontaktes zwischen der ersten Walze und dem Reinigungsband gelangen, wodurch insbesondere schädliche Antrocknungen von abgetragenen Beschichtungsmittelresten auf dem Reinigungsband vermindert oder sogar gänzlich verhindert werden können.

Die oberflächliche Tangentialgeschwindigkeit der ersten Walze kann vorzugsweise derart eingestellt sein, dass sie betraglich der Fördergeschwindigkeit des Reinigungsbandes in Hauptförderrichtung entspricht oder sich von dieser unterscheidet. Insbesondere kann die oberflächliche Tangentialgeschwindigkeit der ersten Walze kleiner oder größer sein als die Fördergeschwindigkeit des Reinigungsbandes in Hauptförderrichtung oder eines Anteils der Fördergeschwindigkeit, welcher parallel zu der oberflächlichen Tangentialgeschwindigkeit der ersten Walze verläuft.

Die Orientierung der Rotationsbewegung der ersten Walze ist grundsätzlich auch unabhängig von der Translationsbewegung des Transportbandes frei einstellbar. Es liegt also im Rahmen der Erfindung, dass eine oberflächliche Tangentialgeschwindigkeit an dem Mantel der ersten Walze und die oberflächliche Transportbandgeschwindigkeit des Transportbandes in dem vorgesehenen Kontakt zwischen der ersten Walze und dem Transportband im Wesentlichen parallel zueinander gerichtet sind, insbesondere bei einer orthogonalen Ausrichtung der Längsachse der ersten Walze gegenüber der Translationsrichtung des Transportbandes.

Insbesondere kann die Tangentialgeschwindigkeit an dem Mantel der ersten Walze der oberflächlichen Transportbandgeschwindigkeit des Transportbandes zumindest anteilig entgegengesetzt gerichtet sein. Dadurch kann das auf der ersten Walze befindliche erste Lösemittel mittels zweier gegenläufiger Bewegungen zwischen der ersten Walze und dem Transportband auf das Transportband gegeben werden und gleichzeitig die auf dem Transportband befindlichen Beschichtungsmittelreste abgetragen werden.

In einer vorteilhaften Weiterbildung ist die Rotationsbewegung der ersten Walze allerdings derart orientiert, dass die erste Walze im Bereich des Kontaktes mit dem Transportband eine oberflächliche Tangentialgeschwindigkeit aufweist, die zu einer Translationsrichtung des Transportbandes an seinem Untertrum zumindest anteilig gleichgerichtet ist.

Gemäß der vorstehend beschriebenen Weiterbildung ist die erste Walze für eine gleichläufige Bewegung gegenüber dem Transportband vorgesehen. Dies stellt eine Abkehr von der gängigen Konstruktionspraxis dar, welche eine gegenläufige Bewegung zwischen der ersten Walze und einem zu reinigenden Transportband vorsieht.

Die vorteilhafte Weiterbildung beruht auf der oben bereits geschilderten Erkenntnis, dass die zu entfernenden Beschichtungsmittelreste auf dem Transportband üblicherweise inhomogen verteilt sind. Bei einer gegenläufigen Rotationsbewegung der ersten Walze führt dies in dem Bereich des reibenden Kontaktes zwischen der ersten Walze und dem Transportband zu einer stellenweise erhöhten Reibung, wodurch sowohl die erste Walze als auch das Transportband verschleißen.

Mittels der gleichläufigen Rotationsbewegung der ersten Walze gegenüber der Translationsrichtung des Transportbandes bei seiner Translationsbewegung kann das erste Lösemittel in großer Menge auf das Transportband gegeben werden und zunächst gleichmäßig über den gesamten Bereich des reibenden Kontaktes verteilt werden. Dadurch können die Beschichtungsmittelreste angelöst werden, wodurch eine homogenere Verteilung der Beschichtungsmittelreste erzielt werden kann. Die gleichläufige Rotationsbewegung der ersten Walze gegenüber der Translationsrichtung des Transportbandes ist auch für das Reinigungsband vorteilhaft, da die angelösten Beschichtungsmittelreste mit einer homogenen Verteilung von der ersten Walze auf das Reinigungsband gegeben werden können. Dadurch kann auch der Verschleiß des Reinigungsbandes verringert werden.

Es ist zudem von besonderem Vorteil, wenn der Kontakt, welcher zwischen der ersten Walze und dem Transportband ausbildbar ist, nicht dichtend, also stoffdurchlässig, ausgebildet ist. Die erste Walze kann also derart gegenüber dem Transportband positionierbar sein, dass das erste Lösemittel zwischen der ersten Walze und dem Transportband hindurch gefördert werden kann, insbesondere im Bereich ihres Kontaktes. Durch das Einbringen des ersten Lösemittels zwischen dem Transportband und der ersten Walze wird die Reibung in dem gemeinsamen Kontakt gemindert, wodurch der Verschleiß der ersten Walze und des Transportbandes verringert und eine dauerhaft gute Reinigungswirkung erzielt wird. Zudem werden die Standzeiten der ersten Walze und des Transportbandes erhöht.

Die Einstellung eines nicht dichtenden, also stoffdurchlässigen, Kontaktes zwischen der ersten Walze und dem Transportband kann in Abhängigkeit einer Anpresskraft realisiert sein, welche vorzugsweise auf die erste Walze ausgeübt wird. Bevorzugt ist diese Anpresskraft einstellbar, um die Durchlässigkeit des Kontaktes zwischen der ersten Walze und dem Transportband für das erste Lösemittel zumindest indirekt einstellen zu können.

Im Gegensatz zu der vorbekannten Reinigungsvorrichtung muss die erste Walze somit nicht alleine als Reinigungswalze zum Abtrag von Beschichtungsmittelresten dienen. Dennoch liegt es im Rahmen der Erfindung, dass die erste Walze als Reinigungswalze ausgestaltet sein kann. Zudem kann die erste Walze ausschließlich als Auftragswalze ausgestaltet sein, um das Transportband mit einer möglichst großen Menge an Lösemittel zu versehen.

Die oberflächliche Tangentialgeschwindigkeit am dem Mantel der ersten Walze kann vorzugsweise derart einstellbar sein, dass sie betraglich der Translationsgeschwindigkeit des Transportbandes in Translationsrichtung entspricht oder sich von dieser unterscheidet. Insbesondere kann die oberflächliche Tangentialgeschwindigkeit kleiner oder größer sein als die Translationsgeschwindigkeit des Transportbandes in Translationsrichtung oder eines Anteils davon, welcher parallel gerichtet ist zu der besagten Tangentialgeschwindigkeit.

Bei einer möglichen Ausführungsform, bei der die erste Walze dazu vorgesehen ist, um mit Ihrer Längsachse orthogonal zu der Translationsrichtung des Transportbandes an dem Untertrum angeordnet zu werden, weist die oberflächliche Tangentialgeschwindigkeit bei vektorieller Betrachtung vollständig in die gleiche Richtung, wie die Translationsrichtung des Transportbandes. Bei einer anderen möglichen Ausführungsform, bei der die erste Walze dazu vorgesehen ist, um mit Ihrer Längsachse schräggestellt gegenüber der Translationsrichtung des Transportbandes an dem Untertrum angeordnet zu werden, weist die oberflächliche Tangentialgeschwindigkeit an dem Mantel der ersten Walze bei vektorieller Betrachtung einen Geschwindigkeitsanteil auf, der in die gleiche Richtung weist, wie die Translationsrichtung des Transportbandes.

In einer vorteilhaften Weiterbildung besteht das erste Lösemittel im Wesentlichen aus einem Beschichtungsmittel. Bei dem Beschichtungsmittel handelt es sich insbesondere um Lack und/oder Farbe und/oder Beize. Bevorzugt besteht das erste Lösemittel aus dem Beschichtungsmittel, dessen Beschichtungsmittelreste von dem Transportband beseitigt werden sollen.

Der Auftrag von Beschichtungsmittel auf das Transportband stellt eine weitere Abkehr von der gängigen Konstruktionspraxis in der Entwicklung von Reinigungsvorrichtungen dar, deren üblicher Zweck es gerade ist, Beschichtungsmittel von dem Transportband zu entfernen. Allerdings beruht die Weiterbildung auf der überraschenden Erkenntnis, dass als erstes Lösemittel kein Stoff verwendet werden muss, der eine reinigende Wirkung für das Transportband hat.

Vielmehr kann das Transportband zunächst zusätzlich zu den Beschichtungsmittelresten mit weiterem Beschichtungsmittel verunreinigt werden, wodurch die auf dem Transportband befindlichen Beschichtungsmittelreste jedoch angelöst werden können. Anschließend kann das auf das Transportband aufgetragene Beschichtungsmittel zusammen mit den darin gelösten Beschichtungsmittelresten zuverlässig entfernt werden, beispielsweise mittels einer Rakel. Dadurch ist es möglich, das auf das Transportband aufgetragene Beschichtungsmittel und die angelösten Beschichtungsmittelreste gemeinsam abzustreifen und wiederzuverwenden, ohne dass diese mit einem anderen, insbesondere zweitem, Lösemittel versetzt sind. Dies ermöglicht insbesondere eine Wiederverwendung der abgetragenen Beschichtungsmittelreste in der Beschichtungsvorrichtung. Bei dem als erstes Lösemittel verwendeten Beschichtungsmittel kann es sich also insbesondere dann um Lack, Farbe oder Beize handeln, wenn die Beschichtungsmittelreste ebenfalls aus Lack beziehungsweise Farbe beziehungsweise Beize bestehen.

In einer vorteilhaften Weiterbildung ist zumindest ein erstes Reinigungselement, insbesondere eine Reinigungsrakel, für einen reibenden Kontakt mit dem Untertrum des Transportbandes vorgesehen und, in Translationsrichtung des Transportbandes an dem Untertrum gesehen, hinter der ersten Walze angeordnet, um ein mittels der ersten Walze auf das Transportband gegebenes erstes Lösemittel und die auf dem Transportband befindlichen Beschichtungsmittelreste zumindest teilweise von dem Transportband abzustreifen und derart zu leiten, dass sie auf das Reinigungsband gelangen.

Die vorteilhafte Weiterbildung ist nicht auf eine Ausgestaltung des ersten Reinigungselementes beschränkt. Bevorzugt ist dieses jedoch als erste Reinigungsrakel ausgebildet welche zumindest eine Reinigungskante, insbesondere aus Kunststoff, aufweisen kann, welche für den reibenden Kontakt mit dem Transportband vorgesehen und ausgebildet ist, um einen schonenden Abtrag des ersten Lösemittels und Beschichtungsmittelresten von dem Transportband zu ermöglichen. Ein schonender Abtrag ergibt sich insbesondere auch, wenn die Beschichtungsmittelreste zuvor mit dem ersten Lösemittel angelöst werden und homogen verteilt auf dem Transportband vorliegen. Dadurch verringert sich die stellenweise erhöhte Reibung zwischen dem ersten Reinigungselement und dem Transportband, die durch eine inhomogene Verteilung von Beschichtungsmittelresten bedingt sein kann.

Die Reinigungskante der ersten Reinigungsrakel kann dabei gegenüber der Translationsrichtung des Transportbandes an dem Untertrum orthogonal orientiert sein. Alternativ kann die erste Reinigungsrakel gegenüber der Translationsrichtung des Transportbandes an dem Untertrum auch schräggestellt sein, also nicht orthogonal oder parallel zu der Translationsrichtung des Transportbandes an dem Untertrum orientiert sein.

Das erste Reinigungselement ist vorzugsweise derart angeordnet, dass es das von dem Transportband abgestreifte erste Lösemittel und die Beschichtungsmittelreste unmittelbar auf das Reinigungsband leitet. Das derart abgegebene erste Lösemittel und die Beschichtungsmittelreste liegen hierbei entlang einer Gemischbahn auf dem Obertrum des Reinigungsbandes vor, welche sich parallel zu der Hauptförderrichtung des Reinigungsbandes erstreckt.

Ebenso kann das erste Reinigungselement derart angeordnet sein, dass es zumindest bereichsweise zwischen dem Transportband und der ersten Walze angeordnet ist, sodass das von dem Transportband abgestreifte erste Lösemittel und die Beschichtungsmittelreste insbesondere infolge von Schwerkraft auf den Mantel der ersten Walze geführt werden können. Bei einer Rotationsbewegung, bei der die erste Walze an ihrem Mantel eine oberflächliche Tangentialgeschwindigkeit aufweist, die zumindest anteilig gleichgerichtet zu der Translationsrichtung des Transportbandes an dem Untertrum ist, kann das erste Lösemittel und Beschichtungsmittelreste infolge der Rotationsbewegung auch mittelbar auf das Reinigungsband gegeben werden. Bei einer solchen Ausführungsform ist nur ein geringer Bauraum erforderlich, da die erste Walze und das erste Reinigungselement einen geringen Abstand zueinander aufweisen können. Es liegt also im Rahmen einer vorteilhaften Weiterbildung, dass das abgestreifte erste Lösemittel und die Beschichtungsmittelreste mittels des Reinigungselementes mittelbar oder unmittelbar auf das Reinigungsband geleitet werden.

Bei einer Anordnung, bei der das erste Lösemittel und Beschichtungsmittelreste mittels des ersten Reinigungselementes zunächst auf die erste Walze und anschließend auf das Reinigungsband geleitet werden, kann insbesondere vorteilhaft sein, wenn die erste Walze für eine Rotationsbewegung vorgesehen ist, die gleichläufig gegenüber der Translationsrichtung des Transportbandes ist. Denn dadurch ist es möglich, den Mantel der ersten Walze mit erstem Lösemittel und Beschichtungsmittelresten zu versehen, welches infolge der Rotationsbewegung der ersten Walze in den Bereich gelangen kann, in dem diese mit dem Reinigungsband in Kontakt steht. Infolge der reibungsmindernden Wirkung des ersten Lösemittels und des Beschichtungsmittels kann die Reibung in dem besagten Kontakt verringert werden.

Bei einer Anordnung, bei der die erste Walze für eine Rotationsbewegung vorgesehen ist, die gegenläufig zu der Translationsrichtung des Transportbandes ist, kann das von dem ersten Reinigungselement auf die erste Walze gegebene erste Lösemittel und die Beschichtungsmittelreste ebenfalls vorteilhaft sein, da diese infolge der Rotationsbewegung der ersten Walze wieder in den Bereich gefördert werden können, in dem die erste Walze mit dem Transportband in Kontakt steht. Insofern kann das erste Lösemittel von dem Transportband abgetragen, wieder auf die Walze gegeben und von dieser wieder auf das Transportband gelangen, um erneut abgetragen zu werden. Dadurch verringert sich der Aufwand, um eine ausreichende Menge an erstem Lösemittel in den Bereich des Kontaktes zwischen der ersten Walze und des Transportbandes zu fördern. Ferner lässt sich eine Austrocknung des ersten Lösemittels verhindern, da dieses in Bewegung bleiben kann und eine nur geringfügige oberflächliche Verdunstung stattfindet.

In einer vorteilhaften Weiterbildung ist eine Auffangvorrichtung, in Hauptförderrichtung des Reinigungsbandes gesehen, hinter der ersten Walze und/oder dem ersten Reinigungselement angeordnet und derart ausgebildet, um eine vom Reinigungsband transportierte Menge an erstem Lösemittel und Beschichtungsmittelresten zumindest teilweise aufzufangen und in einen ersten Tank zu leiten. Dadurch ist es möglich, das auf das Reinigungsband gegebene erste Lösemittel und die Beschichtungsmittelreste bedarfsweise wiederzuverwenden, zu entsorgen oder anderweitig zu verarbeiten.

In einer vorteilhaften Weiterbildung weist die Auffangvorrichtung mindestens eine Abführrakel und/oder eine Abführwalze auf, welche mit dem Reinigungsband in reibendem Kontakt steht, sowie vorzugsweise mindestens ein Leitelement, welches beispielsweise einen Trichter umfasst, das zwischen der Abführrakel und dem ersten Tank angeordnet ist, um das von dem Reinigungsband aufgenommene erste Lösemittel und die Beschichtungsmittelreste in den ersten Tank zu leiten.

Mittels der Abführrakel ist es auf konstruktiv einfache Weise möglich, das auf das Reinigungsband gegebene erste Lösemittel und/oder Beschichtungsmittel von dem Reinigungsband abzustreifen. Hierfür kann die Abführrakel im Wesentlichen entsprechend der oben beschriebenen ersten Reinigungsrakel ausgestaltet sein und eine Kante aufweisen, über welche die Abführrakel mit dem Reinigungsband in reibendem Kontakt steht.

Zusätzlich oder alternativ kann das Reinigungsband, in Hauptförderrichtung gesehen, hinter der ersten Walze in einem reibenden Kontakt mit mindestens der Abführwalze stehen, welche dazu ausgestaltet ist, die auf das Reinigungsband gegebene Menge an erstem Lösemittel und/oder Beschichtungsmittel mittels einer Rotationsbewegung zumindest teilweise abzustreifen.

In einer vorteilhaften Weiterbildung ist die erste Ausgabevorrichtung über eine erste Pumpvorrichtung mit dem ersten Tank verbunden und dazu ausgebildet, das erste Lösemittel und vorzugsweise Beschichtungsmittelreste aus dem ersten Tank zu fördern und diese auf das Reinigungsband zu geben.

Mittels der vorstehend beschriebenen Weiterbildung ist es möglich, einen Kreislauf einzustellen, in welchem das erste Lösemittel und von dem Transportband abgestreifte Beschichtungsmittelreste zirkulieren können und zu einer Reinigung des Transportbandes beitragen. Mittels der ersten Pumpvorrichtung kann hierfür zumindest das erste Lösemittel aus dem ersten Tank gefördert und über die erste Ausgabevorrichtung in oben bereits erläuterter Weise auf das Reinigungsband gegeben werden. Mittels der ersten Walze kann das erste Lösemittel von dem Reinigungsband aufgenommen und an das Transportband abgegeben werden. Mittels des ersten Reinigungselementes kann das auf das Transportband gegebene erste Lösemittel zusammen mit den auf dem Transportband befindlichen Beschichtungsmittelresten zumindest teilweise abgestreift werden. Das erste Lösemittel und die Beschichtungsmittelreste können von dem ersten Reinigungselement erneut auf das Reinigungsband gelangen und mittels der Auffangvorrichtung in den ersten Tank geleitet werden. Bevorzugt liegen die Beschichtungsmittelreste dabei in dem ersten Lösemittel derart gelöst vor, dass das erste Lösemittel in dem ersten Tank für eine Wiederverwendung zur Verfügung steht.

Vorzugsweise handelt es sich bei dem ersten Tank um einen Beschichtungsmitteltank der Beschichtungsvorrichtung, insbesondere wenn es sich bei dem ersten Lösemittel um ein Beschichtungsmittel handelt, dessen Beschichtungsmittelreste von dem Transportband entfernt werden sollen. Alternativ kann der erste Tank auch mit dem Beschichtungsmitteltank der Beschichtungsvorrichtung verbunden sein.

In einer vorteilhaften Weiterbildung weist die Reinigungsvorrichtung mindestens eine zweite Walze auf, die vorgesehen ist, um, in Translationsrichtung des Transportbandes am Untertrum gesehen, hinter der ersten Walze unterhalb des Transportbandes angeordnet zu werden. Ein Mantel der zweiten Walze ist für einen Kontakt mit dem Untertrum des Transportbandes ausgebildet. Das Reinigungsband ist unterhalb der zweiten Walze angeordnet und steht mit dem Mantel der zweiten Walze in reibendem Kontakt. Die zweite Walze ist derart angeordnet, dass sie mit ihrer Längsachse gegenüber der Hauptförderrichtung des Reinigungsbandes schräggestellt ist. Eine zweite Ausgabevorrichtung ist am Reinigungsband und/oder oberhalb des Reinigungsbandes vorgesehen, um ein zweites Lösemittel derart auf das Reinigungsband aufzugeben, dass es mittels der Förderbewegung des Reinigungsbandes entlang der Hauptförderrichtung in einen Bereich gefördert wird, in welchem das Reinigungsband mit der zweiten Walze in Kontakt steht. Die zweite Walze ist ausgebildet, um mittels einer Rotationsbewegung das auf dem Reinigungsband befindliche zweite Lösemittel zumindest teilweise aufzunehmen und an das Transportband abzugeben. Die Rotationsbewegung der zweiten Walze ist dabei entsprechend oder entgegengesetzt zu der Rotationsbewegung der ersten Walze orientiert.

Die vorstehend beschriebene Weiterbildung ermöglicht es, die Reinigungswirkung der Reinigungsvorrichtung weiter zu verbessern. Ein Vorteil, der mit dem Einsatz der zweiten Walze und dem Auftrag des zweiten Lösemittels einhergeht, besteht darin, dass das zweite Lösemittel sich in seiner Wirkung gegenüber den zu beseitigenden Beschichtungsmittelresten von dem ersten Lösemittel unterscheiden kann. Sofern es sich bei dem ersten Lösemittel um ein Beschichtungsmittel handelt, kann das zweite Lösemittel insbesondere eine ausschließlich reinigende Wirkung für das Transportband haben.

Entsprechend den Ausführungen in Bezug auf die erste Walze ist die Weiterbildung der Reinigungsvorrichtung, welche die zweite Walze umfasst, nicht darauf beschränkt, mit welchem Drehsinn die zweite Walze in die Rotationsbewegung versetzt ist und insbesondere welche Orientierung die Rotationsbewegung gegenüber der Translationsrichtung des Transportbandes oder der Hauptförderrichtung des Reinigungsbandes aufweist. Vorzugsweise sind die zweite Walze und die erste Walze in Bezug auf ihre Längsachsen parallel beabstandet zueinander angeordnet. Insbesondere können die erste und die zweite Walze in Bezug auf ihre Längsachsen einen Winkel zwischen 0 Grad und 90 Grad einschließen.

Die zweite Walze ist derart in eine Rotationsbewegung versetzbar, dass sie im Bereich des vorgesehenen Kontaktes zu dem Transportband an ihrem Mantel eine oberflächliche Tangentialgeschwindigkeit aufweist, welche zumindest anteilig in oder entgegen der Translationsrichtung der Translationsbewegung des Transportbandes gerichtet ist. Ebenso kann die Rotationsbewegung derart eingestellt sein, dass die oberflächliche Tangentialgeschwindigkeit an dem Mantel der zweiten Walze in dem Bereich des reibenden Kontaktes gegenüber der Hauptförderrichtung des Reinigungsbandes anteilig gleich oder entgegengesetzt gerichtet ist.

Es liegt ebenso im Rahmen der vorteilhaften Weiterbildung, dass die oberflächliche Tangentialgeschwindigkeit der zweiten Walze und die Translationsgeschwindigkeit des Transportbandes bzw. des Reinigungsbandes betraglich gleich sind oder sich voneinander unterscheiden. Insbesondere kann die oberflächliche Tangentialgeschwindigkeit der zweiten Walze zumindest mit einem Geschwindigkeitsanteil, welcher entsprechend der Translationsgeschwindigkeit des Transportbandes bzw. der Fördergeschwindigkeit des Reinigungsbandes orientiert ist betraglich jeweils größer oder kleiner sein als diese.

Hinsichtlich der Aufnahme des zweiten Lösemittels von der zweiten Walze gelten im Wesentlichen die Ausführungen in Bezug auf das erste Lösemittel und die erste Walze entsprechend. Es ist mittels der zweiten Walze somit möglich, das zweite Lösemittel in einer gleichläufigen oder gegenläufigen Bewegung von dem Reinigungsband aufzunehmen und an das Transportband abzugeben. Bei einer gleichläufigen Bewegung ist es insbesondere möglich, dass das zweite Lösemittel infolge der Relativbewegung zwischen der zweiten Walze und dem Reinigungsband zunächst durch den Bereich hindurch gefördert wird, in dem die zweite Walze und das Reinigungsband in reibendem Kontakt stehen. Mittels der Rotationsbewegung der zweiten Walze gelangt das zweite Lösemittel anschließend auf das Transportband.

Hinsichtlich der Abgabe des zweiten Lösemittels von der zweiten Walze an das Transportband gelten im Wesentlichen die Ausführungen in Bezug auf das erste Lösemittel und die erste Walze entsprechend. Es ist mittels der zweiten Walze somit möglich, das zweite Lösemittel in einer gleichläufigen oder gegenläufigen Bewegung an das Transportband abzugeben. Bei einer gleichläufigen Bewegung ist es insbesondere möglich, dass das zweite Lösemittel infolge der Relativbewegung zwischen der zweiten Walze und dem Transportband durch den Bereich hindurch zu fördern, in dem die zweite Walze und das Transportband in reibendem Kontakt stehen. Dadurch lässt sich dieses gleichmäßig und vorzugsweise über die gesamte Breite des Kontaktbereiches zwischen der zweiten Walze und des Transportbandes verteilen.

Es liegt im Rahmen der vorteilhaften Weiterbildung, dass das erste Lösemittel und das zweite Lösemittel im Wesentlichen gleich beschaffen sind, also die gleiche Zusammensetzung aufweisen. Es ist jedoch vorteilhaft, wenn sich das zweite Lösemittel von dem ersten Lösemittel unterscheidet. Insbesondere kann das zweite Lösemittel ein Reinigungsmittel umfassen. Dies ist insbesondere dann denkbar, wenn es sich bei dem ersten Lösemittel um Beschichtungsmittel handelt. In einem solchen Fall kann das zweite Lösemittel, im Unterschied zum ersten Lösemittel eine reinigende Wirkung für das Transportband und/oder das Reinigungsband haben, um zumindest jeweils die darauf befindlichen Beschichtungsmittelreste zumindest anlösen zu können. Ein Unterschied zwischen dem ersten Lösemittel und dem zweiten Lösemittel liegt auch dann vor, wenn das erste Lösemittel anteilig in dem zweiten Lösemittel enthalten ist und umgekehrt.

In einer vorteilhaften Weiterbildung ist ein zweites Reinigungselement, insbesondere eine zweite Reinigungsrakel, für einen reibenden Kontakt mit dem Transportband vorgesehen und ist dabei, in Translationsrichtung des Transportbandes am Untertrum gesehen, hinter der zweiten Walze angeordnet, um zumindest eine mittels der zweiten Walze auf das Transportband gegebene Menge des zweiten Lösemittels von dem Transportband abzustreifen und derart zu leiten, dass sie auf das Reinigungsband gelangen.

Bevorzugt ist die zweite Reinigungselement entsprechend dem ersten Reinigungselement ausgebildet. Neben der Menge des zweiten Lösemittels kann ebenso eine auf dem Transportband befindliche Menge des ersten Lösemittels und/oder Beschichtungsmittelresten abgestreift werden, welche nicht bereits von dem ersten Reinigungselement abgestreift ist. Insbesondere ist es mittels des zweiten Reinigungselementes möglich, eine Menge an zweitem Lösemittel von dem Transportband abzustreifen und unmittelbar auf das Reinigungsband zu leiten oder mittelbar zunächst auf die zweite Walze zu leiten, von der aus das zweite Lösemittel auf das Reinigungsband gelangt. Im Übrigen können die Ausführungen zu dem ersten Reinigungselement entsprechend gelten.

In einer vorteilhaften Weiterbildung ist die Auffangvorrichtung in Bezug auf die Hauptförderrichtung des Reinigungsbandes hinter der zweiten Walze und/oder dem zweiten Reinigungselement angeordnet und dazu ausgebildet, um eine von dem Reinigungsband transportierte Menge an zweitem Lösemittel zumindest teilweise von dem Reinigungsband aufzunehmen und in einen zweiten Tank zu leiten.

In einer einfachen Ausgestaltung weist die Auffangvorrichtung eine Abführrakel oder mehrere Abführrakel auf, welche mit dem Reinigungsband jeweils in reibendem Kontakt stehen. Bevorzugt ist für jedes der Abführrakel mindestens ein Leitelement vorgesehen.

Eine erste Abführrakel kann in Bezug auf die Hauptförderrichtung des Reinigungsbandes hinter der ersten Walze und/oder dem ersten Reinigungselement angeordnet sein, um das von dem ersten Reinigungselement auf das Reinigungsband gegebene erste Lösemittel sowie Beschichtungsmittelreste abzustreifen und mittels des dazu gehörigen Leitelementes in den ersten Tank zu leiten. Zusätzlich oder alternativ kann die erste Abführrakel auch hinter der ersten Walze angeordnet sein, um eine nicht mittels der ersten Walze aufgenommene Menge an erstem Lösemittel von dem Reinigungsband abzustreifen.

Eine zweite Abführrakel kann in Bezug auf die Hauptförderrichtung des Reinigungsbandes hinter dem zweiten Reinigungselement angeordnet sein, um das von dem zweiten Reinigungselement auf das Reinigungsband gegebene zweite Lösemittel sowie gegebenenfalls das erste Lösemittel und Beschichtungsmittelreste abzustreifen und mittels des dazu gehörigen Leitelementes in den zweiten Tank zu leiten. Zusätzlich oder alternativ kann die zweite Abführrakel auch hinter der zweiten Walze angeordnet sein, um eine nicht mittels der zweiten Walze aufgenommene Menge an zweitem Lösemittel von dem Reinigungsband abzustreifen.

Zusätzlich oder alternativ kann die Auffangvorrichtung neben der oben bereits beschriebenen Abführwalze auch eine weitere Abführwalze aufweisen, welche jeweils mit dem Reinigungsband in reibendem Kontakt stehen.

Bevorzugt ist der zweite Tank fluidtechnisch von dem ersten Tank getrennt.

In einer vorteilhaften Weiterbildung ist die zweite Ausgabevorrichtung über eine zweite Pumpvorrichtung mit dem zweiten Tank verbunden, um zumindest das zweite Lösemittel aus dem zweiten Tank zu fördern und auf das Reinigungsband zu geben.

Mittels der vorstehend beschriebenen Weiterbildung ist es möglich, neben dem oben bereits beschriebenen Kreislauf, einen zweiten Kreislauf einzustellen, bei dem das zweite Lösemittel auf das Reinigungsband gegeben wird, damit dieses mittels der zweiten Walze von dem Reinigungsband aufgenommen und auf das Transportband gegeben werden kann. Mittels des zweiten Reinigungselementes kann das zweite Lösemittel zusammen mit dem ersten Lösemittel sowie Beschichtungsmittelresten, die nicht von dem ersten Reinigungselement aufgenommen wurden, von dem Transportband abgestreift und derart auf das Reinigungsband geleitet werden, dass diese in den zweiten Tank geführt und aus dem zweiten Tank wieder auf das Reinigungsband gegeben werden können.

Das in dem zweiten Tank befindliche zweite Lösemittel kann mit dem ersten Lösemittel und abgestreiften Beschichtungsmittelresten versetzt sein. Nichtsdestotrotz kann der Inhalt des zweiten Tanks dazu verwendet werden, um auf das Reinigungsband gegeben werden zu können und eine reinigende Wirkung zu erzielen. Ein Verhältnis zwischen dem im zweiten Tank befindlichen zweiten Lösemittel zu dem ersten Lösemittel bzw. zu den Beschichtungsmittelresten kann mittels eines Sättigungssensors, welcher in dem zweiten Tank angeordnet ist, überwacht werden.

Bevorzugt sind der erste Kreislauf und der zweite Kreislauf derart voneinander getrennt, dass das in dem zweiten Kreislauf geführte zweite Lösemittel nicht in den ersten Kreislauf gelangt und sich dort mit dem ersten Lösemittel vermengt. Wenn es sich bei dem ersten Lösemittel um ein Beschichtungsmittel und bei dem zweiten Lösemittel um ein Reinigungsmittel handelt, kann durch eine Trennung des ersten und des zweiten Kreislaufs sichergestellt werden, dass das Beschichtungsmittel nicht mit Reinigungsmittel versetzt ist und somit eine dauerhaft gute Wiederverwendbarkeit aufweisen kann.

In einer vorteilhaften Weiterbildung weist die Reinigungsvorrichtung eine Trockenwalze auf, welche vorgesehen ist, um, in Translationsrichtung des Transportbandes am Untertrum, hinter der ersten Walze oder der zweiten Walze, unterhalb des Untertrums des Transportbandes angeordnet zu werden. Ein Mantel der Trockenwalze ist für einen Kontakt mit dem Untertrum des Transportbandes ausgebildet. Das Reinigungsband ist unterhalb der Trockenwalze angeordnet. Der Mantel der Trockenwalze steht mit dem Obertrum des Reinigungsbandes in Kontakt. Die Trockenwalze ist ausgestaltet, um mittels einer Rotationsbewegung zumindest das auf dem Transportband befindliche zweite Lösemittel aufzunehmen und an das Reinigungsband abzugeben.

Gemäß der vorstehend beschriebenen Weiterbildung kann die Trockenwalze hauptsächlich dazu ausgebildet sein, das auf das Transportband gegebene zweite Lösemittel, welches aus Reinigungsmittel bestehen kann, abzutragen. Hierbei ist es vorteilhaft, dass das Transportband während seines gesamten Reinigungsvorganges nur kurzzeitig mit Reinigungsmittel versehen wird.

Dadurch kann zum Anlösen des ersten Lösemittels und den auf dem Transportband befindlichen Beschichtungsmittelresten ein stark lösendes Reinigungsmittel verwendet werden, welches grundsätzlich eine schädigende Wirkung für das Transportband haben kann. Aufgrund der kurzen Dauer, in welcher das Reinigungsmittel auf dem Transportband verweilt, kann allerdings auf einfache Weise sichergestellt werden, dass das Transportband nicht beschädigt wird. Vorzugsweise ist die Trockenwalze zu der ersten oder der zweiten Walze parallel beabstandet angeordnet.

Entsprechend den Ausführungen in Bezug auf die erste Walze und die zweite Walze ist die Weiterbildung der Reinigungsvorrichtung, welche die Trockenwalze umfasst, nicht darauf beschränkt, mit welchem Drehsinn die Trockenwalze in die Rotationsbewegung versetzt ist und insbesondere welche Orientierung die Rotationsbewegung gegenüber der Translationsrichtung des Transportbandes oder der Hauptförderrichtung des Reinigungsbandes aufweist. Vorzugsweise sind die Trockenwalze und die erste und/oder die zweite Walze in Bezug auf ihre Längsachsen parallel beabstandet zueinander angeordnet. Insbesondere können die Trockenwalze und die erste und/oder die zweite Walze in Bezug auf ihre Längsachsen einen Winkel zwischen 0 Grad und 90 Grad einschließen.

Die Trockenwalze ist derart in eine Rotationsbewegung versetzbar, dass sie im Bereich des vorgesehenen Kontaktes zu dem Transportband an ihrem Mantel eine oberflächliche Tangentialgeschwindigkeit aufweist, welche zumindest anteilig in oder entgegen der Translationsrichtung der Translationsbewegung des Transportbandes gerichtet ist. Ebenso kann die Rotationsbewegung derart eingestellt sein, dass die oberflächliche Tangentialgeschwindigkeit an dem Mantel der Trockenwalze in dem Bereich des reibenden Kontaktes gegenüber der Hauptförderrichtung des Reinigungsbandes anteilig gleich oder entgegengesetzt gerichtet ist.

Es liegt ebenso im Rahmen der vorteilhaften Weiterbildung, dass die oberflächliche Tangentialgeschwindigkeit der Trockenwalze und die Translationsgeschwindigkeit des Transportbandes bzw. des Reinigungsbandes betraglich gleich sind oder sich voneinander unterscheiden. Insbesondere kann die oberflächliche Tangentialgeschwindigkeit der Trockenwalze jeweils größer oder kleiner sein als die Translationsgeschwindigkeit des Transportbandes bzw. der Fördergeschwindigkeit des Reinigungsbandes.

Um die Trocknungswirkung weiter zu verbessern, ist es vorteilhaft, dass eine Trockenrakel dazu vorgesehen ist, um in einem Abstand zu der Trockenwalze in reibenden Kontakt mit dem Transportband gebracht zu werden und das Transportband zu trocknen. Grundsätzlich geht die Verwendung von Trockenrakeln zwar mit einer erhöhten mechanischen Belastung des Transportbandes einher, allerdings hängt dies hauptsächlich von dem dabei herrschenden Anpressdruck ab. Wenn die Trockenrakel jedoch zusätzlich zu der Trockenwalze vorgesehen ist, welche ebenfalls eine trocknende Wirkung hat, ist die abzutragende Menge an Beschichtungsmittel und/oder Lösemittel auf dem Transportband gering. Aus diesem Grund ist nur ein geringer Anpressdruck zwischen der Trockenrakel und dem Transportband erforderlich, um die gewünschte Trocknungswirkung zu erzielen. Es kommt hierbei nicht zu einer merkenswerten Beschädigung des Transportbandes.

Alternativ kann die Reinigungsvorrichtung die Trockenrakel anstelle der Trockenwalze aufweisen, welche vorgesehen ist, um, in Translationsrichtung des Transportbandes am Untertrum, hinter der ersten Walze oder der zweiten Walze, unterhalb des Untertrums des Transportbandes angeordnet zu werden. Eine Kante der Trockenrakel ist bevorzugt für einen reibenden Kontakt mit dem Untertrum des Transportbandes ausgebildet. Das Reinigungsband ist unterhalb der Trockenrakel angeordnet. Die Trockenrakel ist dabei ausgestaltet, um zumindest das auf dem Transportband befindliche zweite Lösemittel aufzunehmen und an das Reinigungsband abzugeben.

In einer vorteilhaften Weiterbildung ist zumindest eine Leitrakel in Bezug auf die Hauptförderrichtung des Reinigungsbandes zumindest hinter einer der Walzen, insbesondere jeweils hinter der ersten oder der zweiten Walze, angeordnet und dazu ausgestaltet, die auf das Reinigungsband gegebene Menge an Lösemittel, insbesondere erstem und zweitem Lösemittel, und Beschichtungsmittelresten quer zu der Hauptförderrichtung des Reinigungsbandes zu leiten, um eine Bahn auf dem Reinigungsband einzustellen.

Die Leitrakel kann als dünnwandiges Bauteil, insbesondere aus einem antistatischen Kunststoff, ausgestaltet sein und dabei eine flache Bauform haben. Die Leitrakel ist vorzugsweise an einem Stirnbereich mindestens einer der Walzen, insbesondere der ersten oder der zweiten Walze, angeordnet und mit einer Erstreckungsebene orthogonal zu dem Reinigungsband orientiert. Dabei schließt die Leitrakel mit ihrer Erstreckungsebene und der Hauptförderrichtung des Reinigungsbandes einen spitzen oder stumpfen Winkel ein.

In einer vorteilhaften Weiterbildung umfasst die Reinigungsvorrichtung mit zumindest ein Anpresselement, welches dazu ausgestaltet ist, eine Pressung zwischen dem Mantel einer der Walzen, insbesondere der ersten Walze und/oder der zweiten Walze und/oder der Trockenwalze, und dem Transportband zu bewirken. Zusätzlich oder alternativ kann das Anpresselement ausgestaltet sein, um eine Anpressung zwischen einem der Reinigungselemente oder Rakel, insbesondere der ersten und/oder der zweiten Reinigungsrakel und/oder der Trockenrakel, und dem Transportband zu bewirken.

Zusätzlich oder alternativ kann ein Anpresselement vorgesehen sein, um eine Pressung zwischen dem Mantel einer der Walzen, insbesondere der ersten Walze und/oder der zweiten Walze und/oder der Trockenwalze, und dem Reinigungsband zu bewirken.

In einer vorteilhaften Weiterbildung kann das Anpresselement zumindest einen Anpressstab und/oder eine drehbar gelagerte Anpresswalze umfassen, welche, bevorzugt parallel versetzt zu einer der Walzen, insbesondere der ersten oder der zweiten Walze und/oder zu der Trockenwalze angeordnet ist, um die Pressung derart zu bewirken, dass eine der Walzen und/oder die Trockenwalze von dem Transportband und/oder von dem Reinigungsband teilweise umschlungen ist.

In einer vorteilhaften Weiterbildung ist zumindest die erste Walze und das Reinigungsband auf einer verfahrbaren Hubvorrichtung angeordnet. Dies erlaubt es, die Reinigungsvorrichtung flexibel positionieren zu können und über einen pneumatischen, magnetischen, hydraulischen, elektrischen oder mechanischen Aktor in der Höhe zu verstellen. Insbesondere ist es hierdurch möglich, die Anpressung zwischen der ersten Walze und dem Transportband bzw. dem Reinigungsband bedarfsgerecht, und vorzugsweise unabhängig voneinander, einzustellen. Bevorzugt ist die Umschlingung der ersten Walze mit dem Transportband und/oder dem Reinigungsband ebenfalls einstellbar. Es liegt im Rahmen der vorteilhaften Weiterbildung, dass die zweite Walze und die Trockenwalze ebenfalls mittels der Hubvorrichtung verstellbar sind, um deren Anpressung und/oder Umschlingung mit dem Transportband und/oder dem Reinigungsband zu erreichen.

Vorzugsweise ist die erste Walze und/oder die zweite Walze und/oder die Trockenwalze gegenüber dem Reinigungsband mittels eines Verstellmechanismus, insbesondere einer Hebelvorrichtung, verlagerbar, insbesondere unabhängig voneinander. Dadurch ist es möglich, das Reinigungsband sowie die Walze, insbesondere die erste und die zweite Walze, sowie die Trockenwalze unabhängig von dem Reinigungsband zu entfernen und zu reinigen. Vorzugsweise sind Einstellschrauben dazu vorgesehen, einen Abstand zwischen einer der Walzen und dem Transportband oder zwischen einer der Walzen und dem Reinigungsband einzustellen.

Wie oben erwähnt, wird die Aufgabe auch gelöst mittels einer Beschichtungsvorrichtung mit einem Transportband zur Aufnahme eines Werkstückes sowie mit zumindest einer Beschichtungseinheit zum oberflächlichen Auftragen eines Beschichtungsmittels auf das Werkstück. Die Beschichtungsvorrichtung umfasst eine Reinigungsvorrichtung mit mindestens einer ersten Walze, welche unterhalb des Transportbandes angeordnet ist und der Mantel der ersten Walze mit einem Untertrum des Transportbandes in Kontakt steht. Die Reinigungsvorrichtung umfasst auch ein endlos umlaufendes Reinigungsband, welches unterhalb der ersten Walze angeordnet ist.

Es ist wesentlich, dass der Mantel der ersten Walze mit einem Obertrum des Reinigungsbandes in Kontakt steht und dass das Reinigungsband mit einer Hauptförderrichtung an dem Obertrum gegenüber einer Längsachse der ersten Walze schräggestellt ist. Ferner ist wesentlich, dass am Reinigungsband und/oder oberhalb des Reinigungsbandes zumindest eine erste Ausgabevorrichtung vorgesehen ist, um ein erstes Lösemittel auf das Reinigungsband aufzugeben. Dabei sind die erste Ausgabevorrichtung und das Reinigungsband derart zueinander angeordnet, dass das auf das Reinigungsband gegebene erste Lösemittel mittels einer Förderbewegung des Reinigungsbandes entlang der Hauptförderrichtung in einen Bereich gefördert wird, in welchem das Reinigungsband mit der ersten Walze in Kontakt steht und wobei die erste Walze derart ausgebildet und angeordnet ist, dass sie mittels einer Rotationsbewegung das auf dem Reinigungsband befindliche erste Lösemittel zumindest teilweise aufnimmt und an das Transportband abgibt.

Vorzugsweise handelt es sich bei der für die Beschichtungsvorrichtung eingesetzten Reinigungsvorrichtung um die erfindungsgemäße Reinigungsvorrichtung oder eine vorteilhafte Weiterbildung davon. Hinsichtlich der erfindungsgemäßen Beschichtungsvorrichtung gelten daher die Ausführungen hinsichtlich der Vorteile und Wirkungen, die mit der erfindungsgemäßen Reinigungsvorrichtung oder einer vorteilhaften Weiterbildung davon erreichbar sind, entsprechend.

Wie oben ebenfalls erwähnt, wird die Aufgabe auch gelöst mittels eines Verfahren zur Reinigung eines mit Beschichtungsmittelresten verunreinigten, endlos umlaufenden Transportbandes, bei dem mindestens eine erste Walze so unterhalb des Transportbandes angeordnet wird, dass sie mit ihrem Mantel mit einem Untertrum des Transportbandes in Kontakt steht. Ein endlos umlaufendes Reinigungsband wird ferner unterhalb der ersten Walze angeordnet.

Es ist wesentlich, dass das Reinigungsband so unterhalb der ersten Walze angeordnet wird, dass der Mantel der ersten Walze in Kontakt mit einem Obertrum des Reinigungsbandes steht, wobei das Reinigungsband mit einer Hauptförderrichtung gegenüber einer Längsachse der ersten Walze schräggestellt ist und dass ein erstes Lösemittel auf das Obertrum des Reinigungsbandes gegeben wird und mittels einer Förderbewegung des Reinigungsbands entlang der Hauptförderrichtung in einen Bereich gefördert wird, in welchem das Reinigungsband mit der ersten Walze in Kontakt steht, und wobei die erste Walze in eine Rotationsbewegung versetzt wird, um das auf dem Reinigungsband befindliche erste Lösemittel aufzunehmen und an das Transportband abzugeben.

Vorzugsweise ist das erfindungsgemäße Verfahren mittels einer erfindungsgemäßen Reinigungsvorrichtung oder einer vorteilhaften Weiterbildung davon durchführbar. Somit gelten die Ausführungen zu den Vorteilen und Wirkungen, die mit der erfindungsgemäßen Reinigungsvorrichtung oder einer vorteilhaften Weiterbildung davon erzielbar sind, entsprechend.

Weitere bevorzugte Merkmale und Ausführungsformen der erfindungsgemäßen Reinigungsvorrichtung werden im Folgenden anhand zweier Ausführungsbeispiele und fünf Figuren erläutert. Die Ausführungsbeispiele sind lediglich vorteilhafte Ausgestaltungen der Erfindung und schränken diese somit nicht ein.
- Figur 1: ein erstes Ausführungsbeispiel einer erfindungsgemäß ausgestalteten Reinigungsvorrichtung für ein mit Beschichtungsmittel verunreinigtes Transportband in schematischer Schrägansicht;
- Figur 2: das Ausführungsbeispiel gemäß Figur 1 in Draufsicht a) sowie eine seitliche Schnittansicht b) einer Walze im Betrieb der Reinigungsvorrichtung;
- Figur 3: zwei mögliche Ausgestaltungen für eine Anpressvorrichtung für die Walze in den seitlichen Schnittansichten a) und b);
- Figur 4: ein zweites Ausführungsbeispiel einer erfindungsgemäß ausgestalteten Reinigungsvorrichtung für ein mit Beschichtungsmittel verunreinigtes Transportband in schematischer Schrägansicht;
- Figur 5: das Ausführungsbeispiel gemäß Figur 4 in Draufsicht a) sowie eine seitliche Schnittansicht b) einer Walze im Betrieb der entsprechenden Reinigungsvorrichtung.

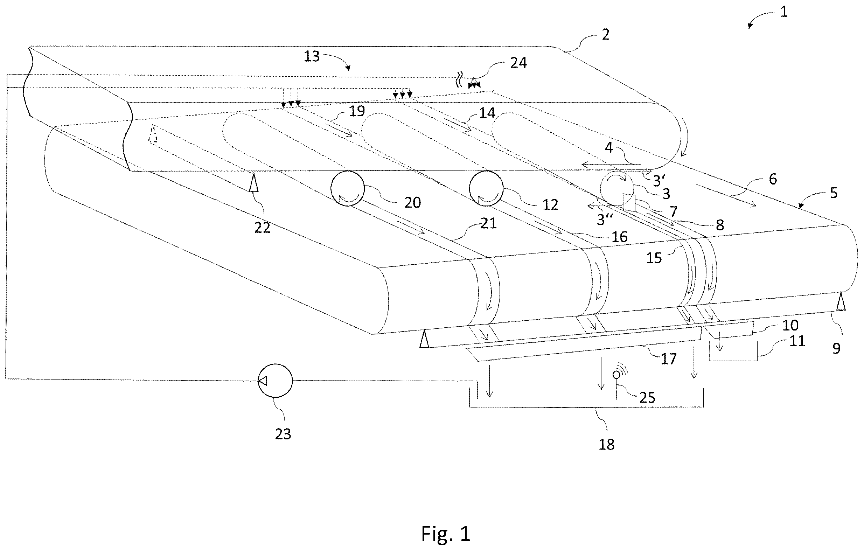

Figur 1 zeigt eine Reinigungsvorrichtung 1 für ein mit Beschichtungsmittel verunreinigtes Transportband 2.

Das Transportband 2 ist Bestandteil einer Beschichtungsvorrichtung (nicht gezeigt) und dient dazu, ein Werkstück (nicht gezeigt) aufzunehmen und durch die Beschichtungsvorrichtung zu fördern. Dabei wird das besagte Werkstück mit Beschichtungsmittel versehen, wobei nicht verhindert werden kann, dass das Transportband 2 mit Beschichtungsmittelresten verunreinigt wird. Um die Beschichtungsmittelreste von dem Transportband 2 zu entfernen, kommt die Reinigungsvorrichtung 1 zum Einsatz.

Die Reinigungsvorrichtung 1 umfasst eine erste Walze 3, welche unterhalb des Transportbandes 2 angeordnet ist und mit dessen Untertrum in einem reibenden Kontakt steht. Ein Walzenantrieb (nicht gezeigt) dient dazu, die erste Walze 3 in eine Rotationsbewegung zu versetzen während das Transportband sich in einer Translationsbewegung in der Translationsrichtung 4 befindet. Hierdurch entsteht eine Relativbewegung in dem reibenden Kontakt zwischen dem Transportband 2 und der ersten Walze 3, bei der die auf dem Transportband 2 befindlichen Beschichtungsmittelreste mittels der ersten Walze 3 zumindest teilweise abgestreift werden. In dem reibenden Kontakt zwischen der ersten Walze 3 und dem Transportband 2 weist die erste Walze 3 eine der Translationsrichtung 4 parallel und entgegengesetzt gerichtete Tangentialgeschwindigkeit 3' auf. Alternativ kann die erste Walze 3 gegenüber dem Transportband 2 derart angeordnet sein, dass die Tangentialgeschwindigkeit 3' und die Transportbandgeschwindigkeit in Translationsrichtung 4 nicht-parallel zueinander gerichtet sind.

Infolge der Rotationsbewegung der ersten Walze 3 gelangen die von dem Transportband 2 abgestreiften Beschichtungsmittelreste auf ein Reinigungsband 5, welches auf einer dem Transportband 2 abgewandten Seite der ersten Walze 3 angeordnet ist und mit dieser ebenfalls in einem reibenden Kontakt steht. Das Reinigungsband 5 wird mittels eines Bandantriebes (nicht gezeigt) in eine Förderbewegung mit einer oberflächlichen Reinigungsbandgeschwindigkeit versetzt, welche entsprechend einer Hauptförderrichtung des Reinigungsbandes orientiert ist. Hierdurch entsteht in dem reibenden Kontakt zwischen der ersten Walze 3 und dem Reinigungsband 5 eine Relativbewegung, mittels derer die auf der ersten Walze 3 befindlichen Beschichtungsmittelreste zumindest teilweise von dem Reinigungsband 5 aufgenommen und fortgefördert werden.

Die erste Walze 3 ist gegenüber dem Transportband 2 derart angeordnet, dass die Längsachse der ersten Walze 3 und die Richtung der Transportbandgeschwindigkeit in Translationsrichtung 4 orthogonal zueinander gerichtet sind. Gegenüber dem Reinigungsband 5 ist die erste Walze 3 jedoch derart angeordnet, dass ihre Längsachse und die Richtung der Reinigungsbandgeschwindigkeit in der Hauptförderrichtung 6 betraglich um etwa 5 Grad schräggestellt sind und dabei einen spitzen Winkel einschließen.

In dem reibenden Kontakt zwischen der ersten Walze 3 und dem Reinigungsband 5 weist die erste Walze 3 eine Tangentialgeschwindigkeit 3" auf, die mit der Reinigungsbandgeschwindigkeit entlang der Hauptförderrichtung 6 einen stumpfen Winkel einschließt und anteilig entgegensetzt gerichtet ist. Hierdurch ist es möglich, die auf das Reinigungsband 5 gegebenen Beschichtungsmittelreste aus dem gemeinsamen Kontaktbereich zwischen der ersten Walze 3 und dem Reinigungsband 5 heraus zu fördern und somit der Anstauung von Beschichtungsmittelresten entgegenzuwirken.

Eine Leitrakel 7 ist in Bezug auf die Reinigungsbandgeschwindigkeit entlang der Hauptförderrichtung 6 hinter der ersten Walze 3 angeordnet und dient dazu, für die auf das Reinigungsband 5 gegebenen Beschichtungsmittelreste eine Beschichtungsmittelbahn 8 einzustellen. Hierfür ist die Leitrakel 7 gegenüber der Hauptförderrichtung 6 in einem spitzen Winkel angeordnet. Alternativ kann die Leitrakel auch dazu dienen, einen an der Walze 3 vorbeiströmenden Lösemittelstrom quer zu der Hauptförderrichtung 6 zu lenken und eine Lösemittelbahn 15 einzustellen. Die Beschichtungsmittelbahn 8 wird mittels einer Abführrakel 9 sowie einem Trichter 10 in einen ersten Tank 11 geleitet.

In dem gezeigten Ausführungsbeispiel wird mittels der ersten Walze 3 nicht die gesamte Menge an Beschichtungsmittelresten von dem Transportband 2 abgestreift. Vielmehr befindet sich in Bezug auf die Translationsbewegung des Transportbandes hinter dem Kontakt zwischen der ersten Walze 3 und dem Transportband 2 noch eine Menge an Beschichtungsmittelresten auf dem Transportband 2. Damit diese Menge an Beschichtungsmittelresten effektiv von dem Transportband 2 entfernt werden kann, wird sie mit Hilfe von Lösemittel angelöst und anschließend mittels einer zweiten Walze 12 nahezu vollständig abgetragen. Bei dem Lösemittel kann es sich um das erste oder das zweite Lösemittel im Sinne der Erfindung handeln.

Zum Auftrag des Lösemittels weist die Reinigungsvorrichtung 1 eine Ausgabevorrichtung 13 auf. Diese Ausgabevorrichtung 13 ist in Bezug auf die Hauptförderrichtung 6 des Reinigungsbandes 5 teilweise vor der ersten Walze 3 angeordnet und dient dazu, Lösemittel auf das Reinigungsband 5 zu geben. Bei dem Lösemittel kann es sich in dem hier gezeigten Ausführungsbeispiel um Reinigungsmittel handeln, welches eine reinigende Wirkung für das Transportband hat. Mittels der Abführbewegung des Reinigungsbandes 5 gelangt das Lösemittel entlang einer Reinigungsmittelbahn 14 in einen Bereich, in welchem die erste Walze 3 mit dem Reinigungsband 5 in reibendem Kontakt steht. Dort nimmt die erste Walze 3 das Reinigungsmittel von dem Reinigungsband 5 auf und fördert es mittels ihrer Rotationsbewegung in den Bereich, in welchem sie mit dem Transportband 2 in reibendem Kontakt steht. Mittels der Relativbewegung zwischen der ersten Walze 3 und dem Transportband 2 gelangt das auf der ersten Walze 3 befindliche Reinigungsmittel auf das Transportband 2. Dadurch kann die dort befindliche Menge an Beschichtungsmittelresten angelöst und verdünnt werden.

Das Lösemittel in der Lösemittelbahn 14 liegt in einer Menge vor, welche nicht vollständig von der ersten Walze 3 aufgenommen werden kann. Aus diesem Grund verbleibt ein Teil des Lösemittels aus der Lösemittelbahn 14 auf dem Reinigungsband und wird infolge der Translationsbewegung des Reinigungsbandes 5 zu einem Stirnbereich der ersten Walze 3 gefördert. An diesem Bereich kann sich das Lösemittel infolge der Schrägstellung der ersten Walze 3 gegenüber der Reinigungsbandgeschwindigkeit 6 anstauen und in einer weiteren Lösemittelbahn 15 an der ersten Walze 3 vorbeiströmen. Das in der Lösemittelbahn 15 vorliegende Reinigungsmittel kann ebenfalls mittels der Abführrakel 9 von dem Reinigungsband 5 abgestreift und in einen zweiten Tank 18 geführt werden, welcher weiter unten noch im Detail beschrieben ist.

Die zweite Walze 12 ist parallel versetzt zu der ersten Walze 3 angeordnet und dient dazu, die auf dem Transportband 2 befindliche und nicht von der ersten Walze aufgenommenen Beschichtungsmittelreste sowie die auf dem Transportband 2 gegebene Menge an Lösemittel zumindest teilweise abzustreifen. Hierfür steht die zweite Walze 12 jeweils in einem reibenden Kontakt mit dem Transportband 2 sowie mit dem Reinigungsband 5.

Der Walzenantrieb (nicht gezeigt) dient dazu, die zweite Walze 12 entsprechend der ersten Walze 3 in eine Rotationsbewegung zu versetzen. Hierdurch entstehen analog zu den Ausführungen bezüglich der ersten Walze 3 Relativbewegungen, mittels derer die auf dem Transportband 2 befindliche Restmenge an Beschichtungsmittelresten und Lösemittel zunächst auf die zweite Walze 12 und anschließend auf das Reinigungsband 5 gelangt. Das Reinigungsband 5 fördert das Gemisch aus Beschichtungsmittelresten und Lösemitteln entlang einer Gemischbahn 16 zu der Abführrakel 9. Mittels eines zweiten Trichters 17 wird das besagte Gemisch in den zweiten Tank 18 geleitet.

Die Ausgabevorrichtung 13 ist derart vor der zweiten Walze 12 angeordnet, dass Lösemittel auf das Reinigungsband 5 gegeben und mittels seiner Translationsbewegung entlang einer Lösemittelbahn 19 zu der zweiten Walze 12 gelangen kann. Mit Hilfe der Rotationsbewegung der zweiten Walze 12 gelangt das auf der zweiten Walze 12 befindliche Lösemittel auf das Transportband 2. Hierdurch kann eine nicht durch die erste und zweite Walze aufgenommene Restmenge an Beschichtungsmittel zusätzlich angelöst und verdünnt werden. Gleichzeitig wird der reibende Kontakt zwischen der zweiten Walze 12 und dem Transportband 2 geschmiert.

Die Reinigungsvorrichtung 1 umfasst eine Trockenwalze 20, welche parallel versetzt zu der ersten Walze 3 und der zweiten Walze 12 angeordnet ist und dazu dient, eine gegebenenfalls noch auf dem Transportband 2 befindliche Menge an Beschichtungsmittelresten sowie Lösemittel zumindest teilweise aufzunehmen.

Der Walzenantrieb (nicht gezeigt) dient dazu, die Trockenwalze 20 entsprechend der ersten Walze 3 und der zweiten Walze 11 in eine Rotationsbewegung zu versetzen. Mittels der Relativbewegung zwischen der Trockenwalze 20 und dem Transportband 2 gelangt die gegebenenfalls noch auf dem Transportband 2 befindliche Menge Beschichtungsmittelresten und Lösemittel auf die Trockenwalze 20 und anschließend auf das Reinigungsband 5. Das Reinigungsband 5 fördert das Gemisch aus Beschichtungsmittelresten und Lösemittel entlang einer Gemischbahn 21 zu der Rakel 9. Mittels des zweiten Trichters 17 wird das entlang der Gemischbahn 21 vorliegende Gemisch aus Beschichtungsmittel und Reinigungsmittel in den zweiten Tank 18 geleitet.

Eine Trockenrakel 22 ist in Bezug auf die Translationsbewegung des Transportbandes 2 hinter der Trockenwalze 20 angeordnet und steht mit dem Transportband 2 in mechanischem Kontakt. Das mittels der Trockenrakel 22 abgerakelte Medium kann von der Trockenrakel 22 auf das Reinigungsband 5 gelangen und infolge der Reinigungsbandbewegung entsprechend der Bahnen 8, 15, 16 und 21 Bahn (nicht gezeigt) vorliegen, die mittels der Abführrakel 9 und dem Trichter 17 in den zweiten Tank 18 geleitet werden kann.

Die in dem zweiten Tank 18 befindliche Mischung aus Lösemittel und Beschichtungsmittelresten liegt in einem Verhältnis vor, bei dem der Anteil an Lösemittel gegenüber dem Anteil an Beschichtungsmittelresten deutlich überwiegt. Daher kann das in dem Reinigungstank 18 befindliche Lösemittel mittels einer Pumpe 23 zu der Ausgabevorrichtung 13 gefördert und zu Reinigungs- und Schmierzwecken auf das Reinigungsband 5 gegeben werden. Ein Sättigungssensor 25 dient dazu, die Sättigung des Lösemittels mit dem Beschichtungsmittel in dem zweiten Tank 18 zu messen und ein Signal auszugeben, wenn die Sättigung einen zuvor eingestellten Grenzwert überschreitet.

Die Ausgabevorrichtung 13 umfasst ferner eine Sprühdüse 24, mittels derer das Reinigungsmittel aus dem Reinigungstank 18 auf einen Randbereich des Reinigungsbandes 5 gegeben und unmittelbar zu der Abführrakel 9 gefördert werden kann. Hierdurch kann der mechanische Kontakt zwischen dem Reinigungsband 5 und der Abführrakel 9 geschmiert werden, um die Lebensdauer des Reinigungsbandes 5 zu erhöhen.

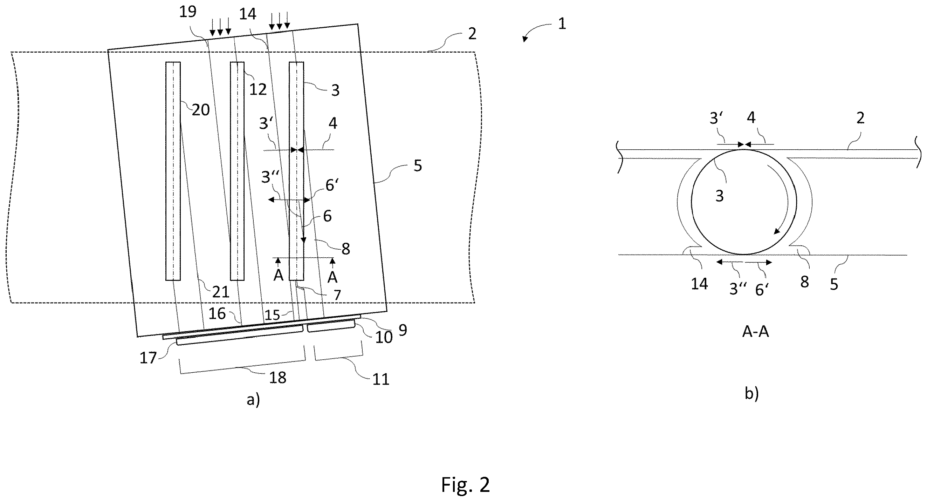

Draufsicht a) der Figur 2 soll dem besseren Verständnis der relativen Anordnungen zwischen dem Transportband 2 und den Bestandteilen der Reinigungsvorrichtung 1 dienen, welche in Figur 1 gezeigt sind. Zur besseren Übersichtlichkeit ist die Reinigungsvorrichtung 1 auf einen Teil der in Figur 1 gezeigten Komponenten reduziert, wobei für die verbliebenen Komponenten dieselben Bezugszeichen verwendet sind.

Wie in Bezug auf Figur 1 bereits erläutert, befindet sich das in Ansicht a) der Figur 2 gezeigte Transportband 2 in dem Kontaktbereich zu der ersten Walze 3 in einer Translationsbewegung mit einer oberflächlichen Transportbandgeschwindigkeit in Translationsrichtung 4. Die erste Walze 3, die zweite Walze 12 und die Trockenwalze 20 sind mit ihren jeweiligen Längsachsen im Wesentlichen orthogonal zu der Transportbandgeschwindigkeit in Translationsrichtung 4 ausgerichtet.

In dem Kontakt zwischen dem Transportband 2 und der ersten Walze 3 verlaufen die Transportbandgeschwindigkeit in Translationsrichtung 4 und die Tangentialgeschwindigkeit 3' der ersten Walze 3 parallel und sind entgegengesetzt zueinander gerichtet. Die Tangentialgeschwindigkeiten (nicht gezeigt) der zweiten Walze 12 und der Trockenwalze 20 sind ebenfalls parallel und entgegengesetzt zu der Transportbandgeschwindigkeit in Translationsrichtung 4 gerichtet.

Wie ebenfalls in Bezug auf Figur 1 bereits erläutert, befindet sich das Reinigungsband 5 im Kontaktbereich zu der ersten Walze 3 ebenfalls in einer Translationsbewegung und weist dabei eine oberflächliche Reinigungsbandgeschwindigkeit in der Hauptförderrichtung 6 auf.

In dem Kontakt zwischen dem Reinigungsband 5 und der ersten Walze 3 weist die Reinigungsbandgeschwindigkeit in der Hauptförderrichtung 6 einen Geschwindigkeitsanteil 6' auf. Ferner weist die erste Walze 3 im Kontakt zu dem Reinigungsband 5 eine Tangentialgeschwindigkeit 3" auf. In dem Kontakt zwischen dem Reinigungsband 5 und der ersten Walze 3 verlaufen der Geschwindigkeitsanteil 6`und die Tangentialgeschwindigkeit 3" parallel und sind entgegengesetzt zueinander gerichtet. Die Tangentialgeschwindigkeiten (nicht gezeigt) der zweiten Walze 12 und der Trockenwalze 20 sind in ihren jeweiligen Kontakten zu dem Reinigungsband ebenfalls parallel und entgegengesetzt zu dem Geschwindigkeitsanteil 6` gerichtet.

Die Schnittdarstellung A-A in Ansicht b) der Figur 2 verdeutlicht die oben beschriebenen Ausrichtungen der Tangentialgeschwindigkeit 3' gegenüber der Transportbandgeschwindigkeit in Translationsrichtung 4 im Kontakt zwischen der ersten Walze 3 und dem Transportband 2. Ebenso zeigt die Schnittdarstellung A-A die Ausrichtungen der Tangentialgeschwindigkeit 3" gegenüber dem Geschwindigkeitsanteil 6` der Reinigungsbandgeschwindigkeit 6 im Kontakt zwischen der ersten Walze 3 und dem Reinigungsband 5.

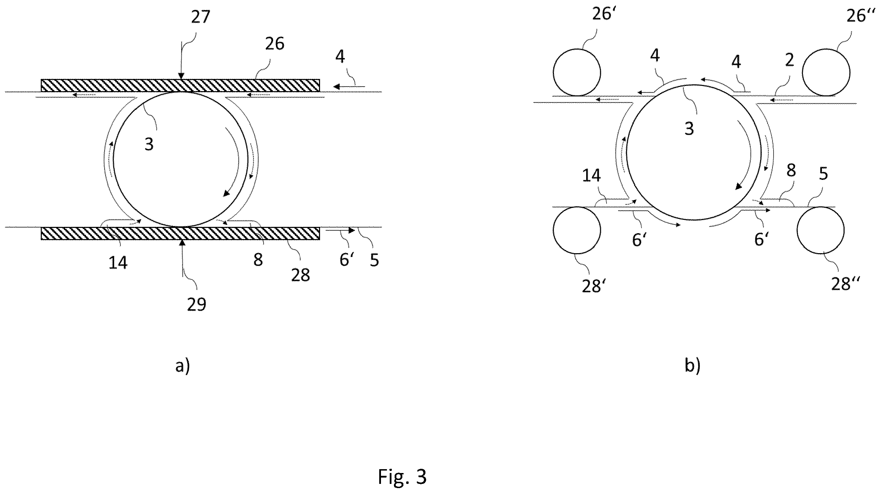

Um die Reinigungswirkung der ersten oder der zweiten Walzen 3 bzw. 12 oder etwa die Trocknungswirkung der Trockenwalze 20 sowie der Trockenrakel 22 zu verbessern, ist es vorteilhaft, eine Umschlingung bzw. einen Anpressdruck zwischen den genannten Walzen gegenüber dem Transportband 2 und dem Reinigungsband zu erhöhen. Hierfür können für die Reinigungsvorrichtung 2 gemäß den Figuren 1 und 2 zusätzliche Anpresselemente vorgesehen sein, welche in zwei verschiedenen Ausführungsformen in den Ansichten a) und b) gemäß Figur 3 exemplarisch an der ersten Walze 3 gezeigt sind.

Ansicht a) der Figur 3 zeigt die erste Walze 3, welche in bereits erläuterter Weise mit dem Transportband 2 und dem Reinigungsband 5 in reibendem Kontakt steht. Auf einer der ersten Walze 3 abgewandten Seite des Transportbandes 2 ist ein erstes Anpresselement 26 in Gestalt eines Anpresstisches angeordnet. Das erste Anpresselement 26 dient dazu, eine einstellbare Anpresskraft 27 auf das Transportband 2 auszuüben und dieses gegen die erste Walze 3 zu pressen.

Ein zweites Anpresselement 28, welches ebenfalls in Gestalt eines Anpresstisches ausgebildet ist, ist auf einer der ersten Walze 3 abgewandten Seite des Reinigungsbandes 5 angeordnet. Das zweite Anpresselement 28 dient dazu, eine einstellbare Anpresskraft 29 auf das Reinigungsband 5 auszuüben und dieses gegen die erste Walze 3 zu pressen.

Ansicht b) der Figur 3 zeigt eine alternative Anordnung aus Anpresselementen 26', 26" sowie 28` und 28", von denen die Anpresselemente 26', 26" als drehbar gelagerte Anpresswalzen ausgestaltet sind, die sich mit ihren Längsachsen im Wesentlichen parallel zu der ersten Walze 3 erstrecken. Die Anpresselemente 26' und 26" sind auf einer der ersten Walze 3 abgewandten Seite des Transportbandes 2 angeordnet und sind derart gegenüber der ersten Walze 3 versetzt, dass das Transportband 2 um die erste Walze 3 gespannt wird und diese dabei teilweise umschlingt. Die Anpresselemente 28` und 28" sind als nicht drehbar gelagerte Anpressstäbe ausgebildet und sind entsprechend der Anordnung der Anpresselemente 26', 26"auf der Seite des Reinigungsbandes 5 angeordnet und bewirken eine Umschlingung und Spannung der ersten Walze 3 mit dem Reinigungsband 5

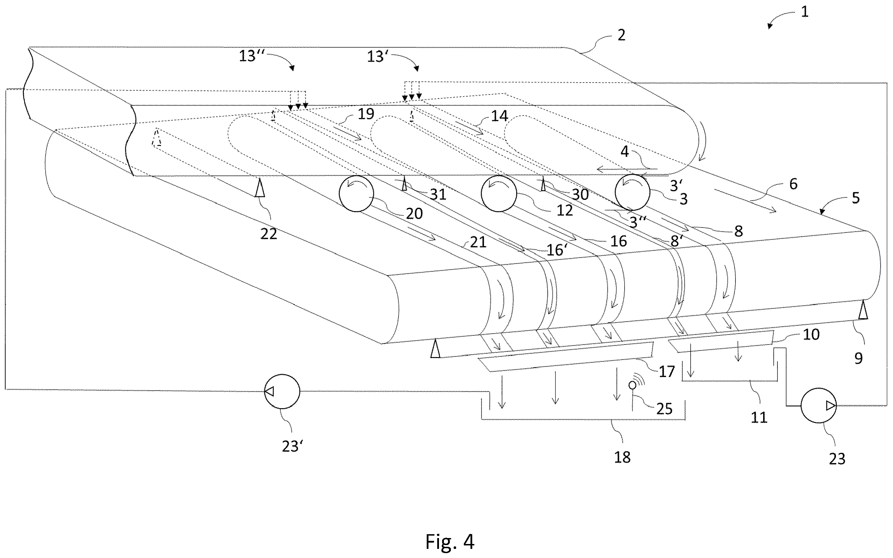

Figur 4 zeigt eine alternative Ausführungsform der Reinigungsvorrichtung 1, welche zum Teil die gleichen Merkmale aufweist, wie die in die Figuren 1 und 2 gezeigte Reinigungsvorrichtung 1. Zum einfacheren Verständnis der Figur 4 werden für diese gleichen Merkmale entsprechend identische Bezugszeichen verwendet, wie in den Figuren 1 und 2.

Bei der in Figur 4 gezeigten Reinigungsvorrichtung 1 sind eine erste Walze 3, eine zweite Walze 12 und eine Trockenwalze 20 unterhalb eines Transportbandes 2 angeordnet und im Bereich des Untertrums des Transportbandes 2 mit diesem in Kontakt. Auf einer dem Transportband 2 abgewandten Seite befindet sich ein Reinigungsband 5, welches sich ebenfalls in reibendem Kontakt mit der ersten Walze 3, der zweiten Walze 12 und der Trockenwalze 20 befindet.

Das Reinigungsband 5 weist bei seiner Förderbewegung an dem Obertrum eine Hauptförderrichtung 6 auf, welche gegenüber den Längsachsen der ersten Walze 3, der zweiten Walze 12 und der Trockenwalze 20 jeweils betraglich um ca. 5 Grad schräggestellt ist.

Eine erste Ausgabevorrichtung 13' ist angeordnet, um ein erstes Lösemittel derart auf das Reinigungsband 5 zu geben, dass dieses mittels einer Förderbewegung des Reinigungsbandes 5 entlang der Hauptförderrichtung 6 in einen Bereich gefördert wird, in welchem das Reinigungsband 5 mit der ersten Walze 3 in Kontakt steht.

Die erste Walze 3 dient dazu, das auf das Reinigungsband 5 gegebene erste Lösemittel aufzunehmen und an das Transportband 2 abzugeben, um die darauf befindlichen Beschichtungsmittelreste anzulösen. Während der Zuführung des ersten Lösemittels zu der ersten Walze 3 liegt dieses entsprechend den Ausführungen zu Figur 1 entlang einer Lösemittelbahn 14 vor.

Im Unterschied zu der in den Figuren 1 und 2 gezeigten Reinigungsvorrichtung ist die Tangentialgeschwindigkeit 3" der ersten Walze 3 im Bereich des Kontaktes mit dem Reinigungsband 5 anteilig entsprechend seiner Hauptförderrichtung 6 orientiert. Infolge der dadurch eingestellten Relativbewegung zwischen der ersten Walze 3 und dem Reinigungsband 5 wird das erste Lösemittel zunächst zwischen der ersten Walze 3 und dem Reinigungsband 5 hindurch gefördert. Dies bedeutet, dass der gemeinsame Kontakt zwischen der ersten Walze 3 und dem Reinigungsband 5 nicht dichtend, also stoffdurchlässig ausgebildet ist. Dies kann in Abhängigkeit einer einstellbaren Anpresskraft zwischen der ersten Walze 3 und dem Reinigungsband 5 erreicht werden, beispielsweise mittels eines der Anpresselemente 29, 28', 28" gemäß Figur 3.

Mittels der Rotationsbewegung der ersten Walze 3 wird das erste Lösemittel anschließend zu dem Transportband 2 gefördert. Im Unterschied zu der in den Figuren 1 und 2 gezeigten Reinigungsvorrichtung 1 ist die Rotationsbewegung der ersten Walze 3 derart orientiert, dass die erste Walze 3 im Bereich des Kontaktes mit dem Transportband 2 eine Tangentialgeschwindigkeit 3' aufweist, die zu der Translationsbewegung des Transportbandes 2 gleichgerichtet ist. Dadurch wird das Lösemittel also in einem Gleichlauf zu der Translationsbewegung 4 auf das Transportband 2 gegeben und zwischen der ersten Walze 3 und dem Transportband 2 hindurch gefördert. Somit ist auch der Kontakt zwischen der ersten Walze 3 und dem Transportband 2 nicht dichtend ausgestaltet. Infolge eines derartigen Lösemittelauftrages wird das erste Lösemittel gleichmäßig über die gesamte Breite des Transportbandes 2 verteilt. Dadurch lassen sich die auf dem Transportband 2 befindlichen Beschichtungsmittelreste anlösen und, wie noch im Detail erläutert ist, von dem Transportband 2 entfernen. Zudem wird die Reibung zwischen der ersten Walze 3 und dem Transportband 2 gemindert, wodurch sich ihre jeweiligen Standzeiten verlängern.

Bei dem ersten Lösemittel handelt es sich in dem in Figur 4 gezeigten Ausführungsbeispiel um Beschichtungsmittel, dessen Beschichtungsmittelreste vom Transportband 2 beseitigt werden sollen. In einer denkbaren anderen Ausführungsform kann als erstes Lösemittel also Lack, Farbe oder Beize als erstes Lösemittel zum Einsatz kommen. Der Einsatz von Beschichtungsmittel als erstes Lösemittel geht mit dem Vorteil einher, dass dieses eine lösende Wirkung für die auf dem Transportband 2 befindlichen Beschichtungsmittelreste aufweisen. Dadurch können Beschichtungsmittelreste durch den Auftrag des Beschichtungsmittels also angelöst und mit anderen Mitteln, welche nachfolgend noch im Detail erläutert sind, entfernt werden. Bei der ersten Walze 3 handelt es sich somit um eine Auftragswalze, die im Wesentlichen keine reinigende Wirkung für das Transportband aufweist.

Eine nicht von der ersten Walze 3 aufgenommene Menge an erstem Lösemittel wird infolge der Förderbewegung des Reinigungsbandes 5 entlang der Hauptförderrichtung 6 abgefördert und mittels der Abführrakel 9 und dem Trichter 10 in einen ersten Tank 11 geleitet. Dabei liegt das erste Lösemittel in einer Lösemittelbahn 8 vor, die sich im Wesentlichen entlang der Hauptförderrichtung 6 erstreckt.

Eine erste Reinigungsrakel 30 ist für einen reibenden Kontakt mit dem Untertrum des Transportbandes 2 vorgesehen und ist derart zu der ersten Walze 3 beabstandet angeordnet, dass das mittels der ersten Walze 3 auf das Transportband gegebene erste Lösemittel und die auf dem Transportband 2 befindlichen Beschichtungsmittelreste zumindest teilweise von dem Transportband 2 abgestreift und auf das Reinigungsband 5 gegeben werden. Die derart auf das Reinigungsband 5 gegebene Menge an erstem Lösemittel und den abgestreiften Beschichtungsmittelresten liegen in einer Bahn 8' vor, welche mittels der Abführrakel 9 und dem Trichter 10 in den ersten Tank 11 geleitet wird.

Eine erste Pumpvorrichtung 23 ist mit dem Tank 11 verbunden und fördert das erste Lösemittel zu einer ersten Ausgabevorrichtung 13`, mittels derer das erste Lösemittel gemeinsam mit den Beschichtungsmittelresten in der Lösemittelbahn 14 auf das Reinigungsband 5 gegeben wird. Dadurch gelangen diese, in oben bereits beschriebener Weise, in den Bereich, in welchem die erste Walze 3 mit dem Reinigungsband 5 in Kontakt steht, um über die Rotationsbewegung der ersten Walze 3 auf das Transportband 2 gegeben zu werden.

Eine zweite Walze 12 ist parallel beabstandet zu der ersten Walze 3 angeordnet und ist ebenfalls in eine Rotationsbewegung versetzt, welche entsprechend der Rotationsbewegung der ersten Walze 3 orientiert ist.

Eine zweite Ausgabevorrichtung 13" ist vorgesehen, um ein zweites Lösemittel auf das Reinigungsband 5 zu geben. Das zweite Lösemittel umfasst ein Reinigungsmittel und liegt entsprechend der Hauptförderrichtung 6 des Reinigungsbandes 5 entlang einer Lösemittelbahn 19 vor. Das zweite Lösemittel wird mittels der Förderbewegung des Reinigungsbandes 5 in den Bereich gefördert, in dem die zweite Walze 12 in reibendem Kontakt mit dem Reinigungsband 5 steht. Infolge einer Relativbewegung zwischen dem Reinigungsband 5 und der zweiten Walze 12 wird das zweite Lösemittel, im Wesentlichen entsprechend den Ausführungen zu dem ersten Lösemittel, zunächst zwischen der zweiten Walze 12 und dem Reinigungsband 5 hindurchgefördert und daraufhin infolge der Rotationsbewegung der zweiten Walze 12 an das Transportband 2 gegeben.

Eine nicht von der zweiten Walze 12 aufgenommene Menge an zweitem Lösemittel wird infolge der Förderbewegung des Reinigungsbandes 5 entlang der Hauptförderrichtung 6 abgefördert und mittels der Abführrakel 9 und dem Trichter 17 in einen zweiten Tank 18 geleitet. Dabei liegt das zweite Lösemittel in einer Bahn 16 vor, die sich im Wesentlichen entlang der Hauptförderrichtung 6 erstreckt.

Da sich die Rotationsbewegung der zweiten Walze 12 nicht von der ersten Walze 3 unterscheidet, wird das zweite Lösemittel in einer gleichläufigen Bewegung zwischen der zweiten Walze 12 und dem Transportband 2 auf das Transportband 2 gegeben und gleichmäßig auf diesem verteilt. Dadurch lässt sich das auf dem Transportband befindliche und nicht mittels der ersten Reinigungsrakel 30 aufgenommene erste Lösemittel sowie Beschichtungsmittelreste gleichmäßig anlösen.

Eine zweite Reinigungsrakel 31 ist in Bezug auf die Translationsrichtung des Transportbandes 2 hinter der zweiten Walze 12 angeordnet und dient dazu, das auf dem Transportband 2 befindliche angelöste erste Lösemittel und Beschichtungsmittelreste sowie das zweite Lösemittel abzustreifen und auf das Reinigungsband 5 zu geben. Das mittels der zweiten Reinigungsrakel 31 auf das Reinigungsband 5 gegebene zweite Lösemittel liegt also gemeinsam mit dem ebenfalls abgestreiften restlichen, ersten Lösemittel und Beschichtungsmittelresten entlang einer Bahn 16' vor, welche sich parallel zu der Bahn 16 erstreckt, und wird mittels der Abführrakel 9 und dem Trichter 17 ebenfalls in den zweiten Tank 18 geleitet.

Eine Trockenwalze 20 ist parallel beabstandet zu der ersten und der zweiten Walze 3 bzw. 12 angeordnet und steht an ihrem Mantel in einem Kontakt mit dem Transportband. Das Reinigungsband 5 ist unterhalb der Trockenwalze 20 angeordnet. An einer dem Transportband 2 abgewandten Seite steht die Trockenwalze 20 mit ihrem Mantel in reibendem Kontakt mit dem Reinigungsband 5. Mittels einer Rotationsbewegung der Trockenwalze 20 wird zumindest das auf dem Transportband 2 befindliche Lösemittel sowie noch vorhandene Beschichtungsmittelreste aufgenommen und an das Reinigungsband 5 abgegeben.

Die Rotationsbewegung der Trockenwalze 20 entspricht den Rotationsbewegungen der jeweils ersten Walze 3 und der zweiten Walze 12. Entgegen den Ausführungen zu der ersten Walze 3 und der zweiten Walze 12 erfolgt kein gesonderter Lösemittelauftrag auf die Trockenwalze 20. Diese dient alleine der Trocknung des Transportbandes 2, wobei eine aufgenommene Menge an Lösemittel, welches das erste und das zweite Lösemittel umfassen kann, sowie etwaige Beschichtungsmittelreste an das Reinigungsband 5 geben, entlang einer Bahn 21 zu der Abführrakel 9 geleitet und in den zweiten Tank 18 geführt werden. Eine zweite Trockenrakel 22 dient, wie in Bezug auf die Figuren 1 bis 3 bereits beschrieben, der zusätzlichen Trocknung des Transportbandes 2.

Eine zweite Pumpvorrichtung 23` dient dazu, das in dem Tank 18 enthaltene Lösemittel, welches das erste Lösemittel und das zweite Lösemittel enthalten kann, sowie Beschichtungsmittelreste zu der zweiten Ausgabevorrichtung 13" zu fördern. Dadurch lässt sich ein Kreislauf einstellen, in welchem ein Gemisch aus erstem Lösemittel und zweitem Lösemittel sowie Beschichtungsmittelresten zu Reinigungszwecken auf das Reinigungsband 5 gegeben und über die oben beschriebene Anordnung von zweiter Walze 12, zweiter Reinigungsrakel 31 und der Trockenwalze 20 wieder in den Tank 18 gelangen kann.

Im Unterschied zu den Figuren 1 und 2 erfolgt bei der in Figur 4 gezeigten Reinigungsvorrichtung 1 die Reinigung des Transportbandes 2 nicht mittels der ersten Walze 3 und der zweiten Walze 12, sondern vielmehr mittels der ersten Reinigungsrakel 30 und der zweiten Reinigungsrakel 31. Die erste Walze 3 und die zweite Walze 12 dienen vielmehr vorrangig dazu, das Transportband 2 homogen mit Lösemittel zu versehen, um gute Bedingungen für ein Abrakeln des Transportbandes 2 zu schaffen.

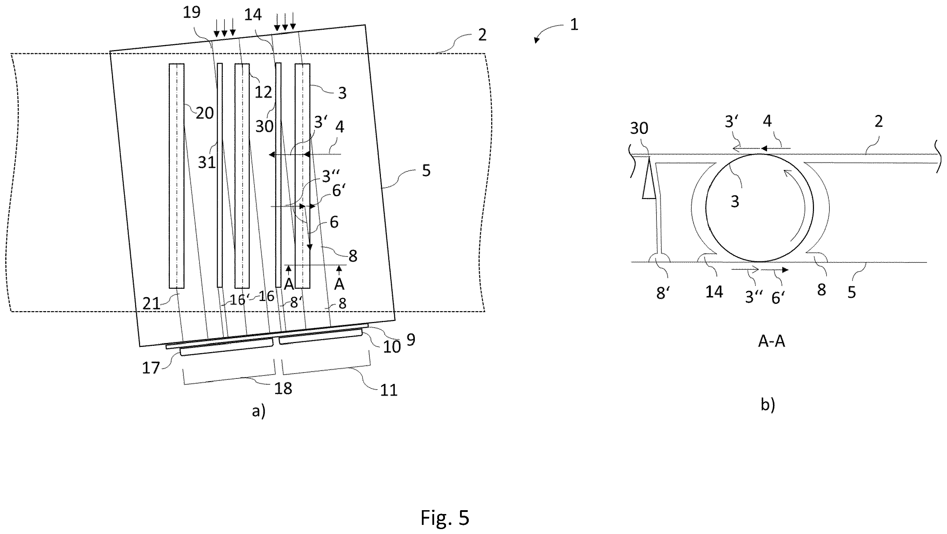

Draufsicht a) der Figur 5 soll dem besseren Verständnis der relativen Anordnungen zwischen dem Transportband 2 und den Bestandteilen der Reinigungsvorrichtung 1 dienen, welche in Figur 4 gezeigt sind. Zur besseren Übersichtlichkeit ist die Reinigungsvorrichtung 1 auf einen Teil der in Figur 4 gezeigten Komponenten reduziert, wobei für die verbliebenen Komponenten dieselben Bezugszeichen verwendet sind.

Wie in Bezug auf Figur 4 bereits erläutert, befindet sich das in Ansicht a) der Figur 5 gezeigte Transportband 2 in dem Kontaktbereich zu der ersten Walze 3 in einer Translationsbewegung mit einer oberflächlichen Transportbandgeschwindigkeit in Translationsrichtung 4. Die erste Walze 3, die zweite Walze 12 und die Trockenwalze 20 sind mit ihren jeweiligen Längsachsen im Wesentlichen orthogonal zu der Transport-bandgeschwindigkeit 4 ausgerichtet.

In dem Kontakt zwischen dem Transportband 2 und der ersten Walze 3 verlaufen die Transportbandgeschwindigkeit in Translationsrichtung 4 und die Tangentialgeschwindigkeit 3' der ersten Walze 3 parallel und sind gleich gerichtet. Die Tangentialgeschwindigkeiten (nicht gezeigt) der zweiten Walze 12 und der Trockenwalze 20 sind ebenfalls parallel und gleich gerichtet zu der Transportbandgeschwindigkeit in Translationsrichtung 4.

Wie ebenfalls in Bezug auf Figur 4 bereits erläutert, befindet sich das Reinigungsband 5 im Kontaktbereich zu der ersten Walze 3 in einer Förderbewegung und weist dabei eine oberflächliche Reinigungsbandgeschwindigkeit auf, die entlang der Hauptförderrichtung 6 orientiert ist.

In dem Kontakt zwischen dem Reinigungsband 5 und der ersten Walze 3 weist die Fördergeschwindigkeit des Reinigungsbandes einen Geschwindigkeitsanteil 6' auf. Ferner weist die erste Walze 3 im Kontakt zu dem Reinigungsband 5 eine oberflächliche Tangentialgeschwindigkeit 3" auf. In dem Kontakt zwischen dem Reinigungsband 5 und der ersten Walze 3 verlaufen der Geschwindigkeitsanteil 6' und die Tangentialgeschwindigkeit 3" parallel und sind zueinander gleich gerichtet. Die Tangentialgeschwindigkeiten (nicht gezeigt) der zweiten Walze 12 und der Trockenwalze 20 sind in ihren jeweiligen Kontakten zu dem Reinigungsband 5 ebenfalls parallel und zu dem Geschwindigkeitsanteil 6' gleich gerichtet.

Die Schnittdarstellung A-A in Ansicht b) der Figur 5 verdeutlicht die in Bezug auf Figur 4 beschriebenen Ausrichtungen der Tangentialgeschwindigkeit 3` gegenüber der Transportbandgeschwindigkeit in Translationsrichtung 4 im Kontakt zwischen der ersten Walze 3 und dem Transportband 2. Ebenso zeigt die Schnittdarstellung A-A die Ausrichtungen der Tangentialgeschwindigkeit 3" gegenüber dem Geschwindigkeitsanteil 6` der Reinigungsbandgeschwindigkeit 6 im Kontakt zwischen der ersten Walze 3 und dem Reinigungsband 5.

Zudem ist anhand der Schnittdarstellung A-A in Ansicht b) der Figur 5 gezeigt, dass sich die Bahn 8' einstellt, indem die von der ersten Reinigungsrakel 30 abgestreifte Menge an erstem Lösemittel und Beschichtungsmittelresten auf das Reinigungsband gegeben wird und in der Hauptförderrichtung abgefördert wird. Alternativ zu der hier schematisch gezeigten Anordnung der ersten Reinigungsrakel 30 kann diese derart gegenüber der ersten Walze 3 angeordnet sein, dass die mit ihr abgestreifte Menge an erstem Lösemittel und Beschichtungsmittelresten nicht auf das Reinigungsband 5, sondern auf die erste Walze 3 gegeben werden. Dadurch kann die besagte abgestreifte Menge an erstem Lösemittel und Beschichtungsmittelresten infolge der Rotationsbewegung der ersten Walze 3 zwischen dem Reinigungsband 5 und der ersten Walze 3 hindurchgefördert und mittels der Rotationsbewegung der ersten Walze 3 zu dem Transportband gefördert werden.

## Patentansprüche

1. Reinigungsvorrichtung (1) für ein mit Beschichtungsmittelresten verunreinigtes, endlos umlaufendes Transportband (2), mit mindestens einer ersten Walze (3), welche dazu vorgesehen ist, so unterhalb des Transportbandes (2) angeordnet zu werden, dass der Mantel der ersten Walze (3) mit einem Untertrum des Transportbandes (2) in Kontakt steht, sowie mit einem endlos umlaufenden Reinigungsband (5), welches unterhalb der ersten Walze (3) angeordnet ist,
wobei der Mantel der ersten Walze (3) mit einem Obertrum des Reinigungsbandes (5) in Kontakt steht, und wobei das Reinigungsband (5) bei einer Förderbewegung an dem Obertrum eine Hauptförderrichtung (6) aufweist und derart angeordnet ist, dass es mit der Hauptförderrichtung (6) gegenüber einer Längsachse der ersten Walze (3) schräggestellt ist,
**dadurch gekennzeichnet, dass**
am Reinigungsband (5) und/oder oberhalb des Reinigungsbandes (5) zumindest eine erste Ausgabevorrichtung (13, 13`) vorgesehen ist, um ein erstes Lösemittel derart auf das Reinigungsband (5) aufzugeben, dass es mittels der Förderbewegung des Reinigungsbandes (5) entlang der Hauptförderrichtung (6) in einen Bereich gefördert wird, in welchem das Reinigungsband (5) mit der ersten Walze (3) in Kontakt steht und
wobei die erste Walze (3) derart ausgebildet und angeordnet ist, dass sie mittels einer Rotationsbewegung das auf dem Reinigungsband (5) befindliche erste Lösemittel zumindest teilweise aufnimmt und an das Transportband (2) abgibt.

2. Reinigungsvorrichtung (1) nach Anspruch 1, bei der
die Rotationsbewegung der ersten Walze (3) derart orientiert ist, dass die erste Walze (3) im Bereich des Kontaktes mit dem Transportband (2) eine oberflächliche Tangentialgeschwindigkeit (3') aufweist, die zu einer Translationsrichtung (4) des Transportbandes (2) an seinem Untertrum zumindest anteilig gleichgerichtet ist.

3. Reinigungsvorrichtung (1) nach Anspruch 1 oder 2, bei der
das erste Lösemittel im Wesentlichen aus einem Beschichtungsmittel, insbesondere Lack und/oder Farbe und/oder Beize, besteht, und insbesondere aus dem Beschichtungsmittel besteht, dessen Beschichtungsmittelreste vom Transportband (2) beseitigt werden sollen.

4. Reinigungsvorrichtung (1) nach einem der Ansprüche 1 bis 3, bei der zumindest ein erstes Reinigungselement (30), insbesondere eine erste Reinigungsrakel, für einen reibenden Kontakt mit dem Transportband (2) vorgesehen und, in Translationsrichtung des Transportbandes (2) am Untertrum gesehen, hinter der ersten Walze (3) angeordnet ist, um ein mittels der ersten Walze (3) auf das Transportband (2) gegebenes erstes Lösemittel und die auf dem Transportband (2) befindlichen Beschichtungsmittelreste zumindest teilweise von dem Transportband (2) abzustreifen und derart zu leiten, dass sie auf das Reinigungsband (5) gelangen.

5. Reinigungsvorrichtung (1) nach Anspruch 4, bei der
eine Auffangvorrichtung, in Hauptförderrichtung (6) des Reinigungsbandes (5) gesehen, hinter der ersten Walze (3) und/oder dem ersten Reinigungselement (30) angeordnet und derart ausgebildet ist, um eine vom Reinigungsband transportierte Menge an erstem Lösemittel und Beschichtungsmittelresten zumindest teilweise von dem Reinigungsband aufzufangen und in einen ersten Tank zu leiten.

6. Reinigungsvorrichtung (1) nach Anspruch 5, bei der
die Auffangvorrichtung mindestens eine Abführrakel (9) und/oder eine Abführwalze aufweist, welche mit dem Reinigungsband (5) in reibendem Kontakt stehen, sowie vorzugsweise mindestens ein Leitelement, welches insbesondere einen Trichter (10) umfasst, welches zwischen der Abführrakel (9) und/oder der Abführwalze und dem ersten Tank (11) angeordnet ist, um das von dem Reinigungsband (5) aufgenommene erste Lösemittel und Beschichtungsmittelreste in den ersten Tank (11) zu leiten.

7. Reinigungsvorrichtung (1) nach Anspruch 5 oder 6, bei der
die erste Ausgabevorrichtung (13, 13`) über eine erste Pumpvorrichtung (23) mit dem ersten Tank (11) verbunden ist, und dazu ausgebildet ist, das erste Lösemittel und vorzugsweise Beschichtungsmittelreste aus dem ersten Tank (11) auf das Reinigungsband (5) zu geben.

8. Reinigungsvorrichtung (1) nach einem der voranstehenden Ansprüche, bei der
mindestens eine zweite Walze (12) vorgesehen ist, um, in Translationsrichtung des Transportbandes (2) am Untertrum gesehen, hinter der ersten Walze (3) und unterhalb des Transportbandes angeordnet zu werden, und ein Mantel der zweiten Walze (12) für einen Kontakt mit dem Untertrum des Transportbandes (2) ausgebildet ist und wobei das Reinigungsband (5) auch unterhalb der zweiten Walze (12) angeordnet ist und der Mantel der zweiten Walze (12) mit dem Obertrum des Reinigungsbandes (5) in Kontakt steht, wobei die zweite Walze (12) derart angeordnet ist, dass sie mit einer Längsachse gegenüber der Hauptförderrichtung (6) des Reinigungsbandes (5) schräggestellt ist,
und bei der eine zweite Ausgabevorrichtung (13") am Reinigungsband und/oder oberhalb des Reinigungsbandes (5) vorgesehen ist, um ein zweites Lösemittel derart auf das Reinigungsband (5) aufzugeben, dass es mittels der Förderbewegung des Reinigungsbandes (5) entlang der Hauptförderrichtung (6) in einen Bereich gefördert wird, in welchem das Reinigungsband (5) mit der zweiten Walze (12) in Kontakt steht,
wobei die zweite Walze (12) ausgebildet ist, um mittels einer Rotationsbewegung das auf dem Reinigungsband (5) befindliche zweite Lösemittel zumindest teilweise aufzunehmen und an das Transportband (2) abzugeben, wobei insbesondere die Rotationsbewegung der zweiten Walze (12) entsprechend oder entgegengesetzt zu der Rotationsbewegung der ersten Walze (3) orientiert ist.

9. Reinigungsvorrichtung nach Anspruch 8, bei der
das zweite Lösemittel sich von dem ersten Lösemittel unterscheidet, insbesondere wobei das zweite Lösemittel ein Reinigungsmittel umfasst.

10. Reinigungsvorrichtung (1) nach Anspruch 8 oder 9, bei der
ein zweites Reinigungselement (31), insbesondere eine zweite Reinigungsrakel , für einen reibenden Kontakt mit dem Transportband (2) vorgesehen ist, und, in Translationsrichtung des Transportbandes (2) am Untertrum gesehen, hinter der zweiten Walze (12) angeordnet ist, um zumindest eine mittels der zweiten Walze (12) auf das Transportband (2) gegebene Menge an zweitem Lösemittel und bevorzugt das nicht von dem ersten Reinigungselement (30) abgestreifte erste Lösemittel und/oder Beschichtungsmittelreste von dem Transportband (2) abzustreifen und derart zu leiten, dass sie auf das Reinigungsband (5) gelangen.

11. Reinigungsvorrichtung (1) zumindest nach den Ansprüchen 5 und 8 und/oder 10, bei der
die Auffangvorrichtung, in Hauptförderrichtung (6) des Reinigungsbandes (5) gesehen, hinter der zweiten Walze (12) und/oder dem zweiten Reinigungselement (31) angeordnet und dazu ausgebildet ist, um eine vom Reinigungsband (5) transportierte Menge an zweitem Lösemittel zumindest teilweise von dem Reinigungsband (5) aufzufangen und in einen zweiten Tank zu leiten.

12. Reinigungsvorrichtung (1) zumindest nach Anspruch 11, bei der
die zweite Ausgabevorrichtung (13") über eine zweite Pumpvorrichtung (23`) mit dem zweiten Tank (18) verbunden ist, um zumindest das zweite Lösemittel aus dem zweiten Tank (18) zu fördern und auf das Reinigungsband (5) zu geben.

13. Reinigungsvorrichtung (1) nach einem der voranstehenden Ansprüche, mit einer Trockenwalze (20), welche vorgesehen ist, um, in Translationsrichtung des Transportbandes (2) am Untertrum gesehen, hinter der ersten Walze (3) oder der zweiten Walze (12), unterhalb des Transportbandes (2) angeordnet zu werden, und ein Mantel der Trockenwalze (20) für einen Kontakt mit dem Untertrum des Transportbandes (2) ausgebildet ist und wobei das Reinigungsband (5) auch unterhalb der Trockenwalze (20) angeordnet ist, wobei der Mantel der Trockenwalze (20) mit dem Obertrum des Reinigungsbandes (5) in Kontakt steht, und wobei die Trockenwalze (20) ausgebildet ist, um mittels einer Rotationsbewegung zumindest das auf dem Transportband (2) befindliche zweite Lösemittel aufzunehmen und an das Reinigungsband (5) abzugeben.

14. Beschichtungsvorrichtung mit einem endlos umlaufenden Transportband (2) zur Aufnahme zumindest eines Werkstückes sowie mit zumindest einer Beschichtungseinheit zum oberflächlichen Auftragen eines Beschichtungsmittels auf das Werkstück, sowie mit einer Reinigungsvorrichtung (1), insbesondere gemäß mindestens einem der Ansprüche 1 bis 13, mit mindestens einer ersten Walze (3), welche unterhalb des Transportbandes (2) angeordnet ist und ihr Mantel mit einem Untertrum des Transportbandes (2) in Kontakt steht, sowie mit einem endlos umlaufenden Reinigungsband (5), welches unterhalb der ersten Walze (3) angeordnet ist,
wobei der Mantel der ersten Walze (3) mit einem Obertrum des Reinigungsbandes (5) in Kontakt steht und wobei das Reinigungsband (5) bei einer Förderbewegung an dem Obertrum eine Hauptförderrichtung (6) aufweist und derart angeordnet ist, dass es mit der Hauptförderrichtung (6) gegenüber einer Längsachse der ersten Walze (3) schräggestellt ist,
**dadurch gekennzeichnet, dass**
am Reinigungsband (5) und/oder oberhalb des Reinigungsbandes (5) zumindest eine erste Ausgabevorrichtung (13, 13`) vorgesehen ist, um ein erstes Lösemittel derart auf das Reinigungsband (5) aufzugeben, dass es mittels einer Förderbewegung des Reinigungsbandes (5) entlang der Hauptförderrichtung (6) in einen Bereich gefördert wird, in welchem das Reinigungsband (5) mit der ersten Walze (3) in Kontakt steht und wobei die erste Walze (3) derart ausgebildet und angeordnet ist, dass sie mittels einer Rotationsbewegung das auf dem Reinigungsband (5) befindliche Lösemittel zumindest teilweise aufnimmt und an das Transportband (2) abgibt.

15. Verfahren zur Reinigung eines mit Beschichtungsmittelresten verunreinigten, endlos umlaufenden Transportbandes, bevorzugt mittels einer Reinigungsvorrichtung (1) nach einem der Ansprüche 1 bis 13,
bei dem mindestens eine erste Walze (3) so unterhalb des Transportbandes (2) angeordnet wird, dass der Mantel der ersten Walze (3) mit einem Untertrum des Transportbandes (2) in Kontakt steht, sowie mit einem endlos umlaufenden Reinigungsband (5), welches unterhalb der ersten Walze (3) angeordnet wird,
wobei das Reinigungsband (5) so unterhalb der ersten Walze (3) angeordnet wird, dass der Mantel der ersten Walze (3) in Kontakt mit einem Obertrum des Reinigungsbandes (5) steht, wobei das Reinigungsband (5) mit einer Hauptförderrichtung (6) gegenüber einer Längsachse der ersten Walze (3) schräggestellt ist,
**dadurch gekennzeichnet, dass**
ein Lösemittel auf das Obertrum des Reinigungsbandes (5) gegeben wird und mittels einer Förderbewegung des Reinigungsbandes (5) entlang der Hauptförderrichtung (6) in einen Bereich gefördert wird, in welchem das Reinigungsband (5) mit der ersten Walze (3) in Kontakt steht,
und wobei die erste Walze (3) in eine Rotationsbewegung versetzt wird, um das auf dem Reinigungsband (5) befindliche Lösemittel aufzunehmen und an das Transportband (2) abzugeben.

## Claims

1. Cleaning device (1) for an endlessly circulating conveyor belt (2) contaminated with coating agent residues, having at least one first roller (3), which is provided to be arranged below the conveyor belt (2) such that the casing of the first roller (3) is in contact with a lower run of the conveyor belt (2), and an endlessly circulating cleaning belt (5), which is arranged below the first roller (3),
wherein the casing of the first roller (3) is in contact with an upper run of the cleaning belt (5), and wherein the cleaning belt (5) has a main conveying direction (6) during a conveying movement on the upper run and is arranged such that it is inclined with the main conveying direction (6) relative to a longitudinal axis of the first roller (3),
**characterized in that**
at least one first dispensing device (13, 13') is provided on the cleaning belt (5) and/or above the cleaning belt (5), in order to apply a first solvent to the cleaning belt (5) such that it is conveyed by means of the conveying movement of the cleaning belt (5) along the main conveying direction (6) into a region in which the cleaning belt (5) is in contact with the first roller (3), and
wherein the first roller (3) is configured and arranged such that it at least partially picks up the first solvent located on the cleaning belt (5) by means of a rotational movement and delivers it to the conveyor belt (2).

2. Cleaning device (1) according to claim 1, wherein
the rotational movement of the first roller (3) is oriented such that the first roller (3) has a superficial tangential speed (3') in the region of contact with the conveyor belt (2), which is at least partially aligned with a direction of translation (4) of the conveyor belt (2) on its lower run.

3. Cleaning device (1) according to claim 1 or 2, wherein
the first solvent consists substantially of a coating agent, in particular varnish and/or paint and/or stain, and in particular consists of the coating agent, whose coating agent residues are to be removed from the conveyor belt (2).

4. Cleaning device (1) according to any one of claims 1 to 3, wherein
at least a first cleaning element (30), in particular a first cleaning doctor blade, is provided for frictional contact with the conveyor belt (2) and, as viewed in the direction of translation of the conveyor belt (2) on the lower run, is arranged behind the first roller (3) in order to at least partially wipe off a first solvent applied to the conveyor belt (2) by means of the first roller (3) and the coating agent residues located on the conveyor belt (2) from the conveyor belt (2) and to direct them such that they reach the cleaning belt (5).

5. Cleaning device (1) according to claim 4, wherein
a collecting device, as viewed in the main conveying direction (6) of the cleaning belt (5), is arranged downstream of the first roller (3) and/or the first cleaning element (30) and is configured to at least partially collect a quantity of first solvent and coating agent residues transported by the cleaning belt from the cleaning belt and to direct it into a first tank.

6. Cleaning device (1) according to claim 5, wherein
the collecting device has at least one removal doctor blade (9) and/or a removal roller which are in frictional contact with the cleaning belt (5), and preferably at least one guide element, which comprises in particular a funnel (10), which is arranged between the removal doctor blade (9) and/or the removal roller and the first tank (11), in order to direct the first solvent and coating agent residues collected by the cleaning belt (5) into the first tank (11).

7. Cleaning device (1) according to claim 5 or 6, wherein
the first dispensing device (13, 13') is connected to the first tank (11) by a first pumping device (23) and is configured to apply the first solvent and preferably coating agent residues from the first tank (11) onto the cleaning belt (5).

8. Cleaning device (1) according to any one of the preceding claims, wherein
at least one second roller (12) is provided to be arranged behind the first roller (3) and below the conveyor belt, as viewed in the direction of translation of the conveyor belt (2) on the lower run, and a casing of the second roller (12) is configured for contact with the lower run of the conveyor belt (2), and wherein the cleaning belt (5) is also arranged below the second roller (12) and the casing of the second roller (12) is in contact with the upper run of the cleaning belt (5), wherein the second roller (12) is arranged such that it is inclined with a longitudinal axis relative to the main conveying direction (6) of the cleaning belt (5),
and in which a second dispensing device (13") is provided on the cleaning belt and/or above the cleaning belt (5) in order to apply a second solvent to the cleaning belt (5) such that it is conveyed by means of the conveying movement of the cleaning belt (5) along the main conveying direction (6) into a region in which the cleaning belt (5) is in contact with the second roller (12),
wherein the second roller (12) is configured to at least partially pick up the second solvent located on the cleaning belt (5) by means of a rotational movement and to deliver it to the conveyor belt (2), wherein in particular the rotational movement of the second roller (12) is oriented according to or in the opposite direction to the rotational movement of the first roller (3).

9. Cleaning device according to claim 8, wherein
the second solvent differs from the first solvent, in particular wherein the second solvent comprises a cleaning agent.

10. Cleaning device (1) according to claim 8 or 9, wherein
a second cleaning element (31), in particular a second cleaning doctor blade, is provided for frictional contact with the conveyor belt (2), and, as viewed in the direction of translation of the conveyor belt (2) on the lower run, is arranged behind the second roller (12), in order to wipe off at least a quantity of second solvent applied by means of the second roller (12) onto the conveyor belt (2) and preferably the first solvent and/or coating agent residues not wiped off by the first cleaning element (30) from the conveyor belt (2) and to direct them in such a way that they reach the cleaning belt (5).

11. Cleaning device (1) at least according to claims 5 and 8 and/or 10, wherein
the collecting device, as viewed in the main conveying direction (6) of the cleaning belt (5), is arranged downstream of the second roller (12) and/or the second cleaning element (31) and is configured to collect a quantity of second solvent transported by the cleaning belt (5) at least partially from the cleaning belt (5) and to direct it into a second tank.

12. Cleaning device (1) at least according to claim 11, wherein
the second dispensing device (13") is connected to the second tank (18) via a second pumping device (23') in order to convey at least the second solvent from the second tank (18) and apply it onto the cleaning belt (5).

13. Cleaning device (1) according to any one of the preceding claims,
with a drying roller (20), which is provided to be arranged under the conveyor belt (2), as viewed in the direction of translation of the conveyor belt (2) on the lower run, downstream of the first roller (3) or the second roller (12), and a casing of the drying roller (20) is configured for contact with the lower run of the conveyor belt (2) and wherein the cleaning belt (5) is also arranged below the drying roller (20), wherein the casing of the drying roller (20) is in contact with the upper run of the cleaning belt (5), and wherein the drying roller (20) is configured to pick up at least the second solvent located on the conveyor belt (2) by means of a rotational movement and to deliver it to the cleaning belt (5).

14. Coating device with an endlessly circulating conveyor belt (2) for receiving at least one workpiece and with at least one coating unit for applying a coating agent to the surface of the workpiece, and with a cleaning device (1), in particular according to at least one of claims 1 to 13, with at least one first roller (3), which is arranged below the conveyor belt (2), and its casing is in contact with a lower run of the conveyor belt (2) and with an endlessly circulating cleaning belt (5), which is arranged below the first roller (3),
wherein the casing of the first roller (3) is in contact with an upper run of the cleaning belt (5) and wherein the cleaning belt (5) has a main conveying direction (6) during a conveying movement on the upper run and is arranged such that it is inclined with the main conveying direction (6) relative to a longitudinal axis of the first roller (3), **characterized in that**
at least one first dispensing device (13, 13') is provided on the cleaning belt (5) and/or above the cleaning belt (5), in order to apply a first solvent to the cleaning belt (5) such that it is conveyed by means of a conveying movement of the cleaning belt (5) along the main conveying direction (6) into a region in which the cleaning belt (5) is in contact with the first roller (3), and wherein the first roller (3) is configured and arranged such that it at least partially picks up the solvent located on the cleaning belt (5) by means of a rotational movement and delivers it to the conveyor belt (2).

15. Method for cleaning an endlessly circulating conveyor belt contaminated with coating agent residues, preferably by means of a cleaning device (1) according to any one of claims 1 to 13,
wherein at least one first roller (3) is arranged below the conveyor belt (2) such that the casing of the first roller (3) is in contact with a lower run of the conveyor belt (2), and with an endlessly circulating cleaning belt (5), which is arranged below the first roller (3),
wherein the cleaning belt (5) is arranged below the first roller (3) such that the casing of the first roller (3) is in contact with an upper run of the cleaning belt (5), wherein the cleaning belt (5) is inclined in a main conveying direction (6) relative to a longitudinal axis of the first roller (3),
**characterized in that**
a solvent is applied to the upper run of the cleaning belt (5) and is conveyed by means of a conveying movement of the cleaning belt (5) along the main conveying direction (6) into a region in which the cleaning belt (5) is in contact with the first roller (3),
and wherein the first roller (3) is set into a rotational movement in order to pick up the solvent located on the cleaning belt (5) and deliver it to the conveyor belt (2).

## Revendications

1. Dispositif de nettoyage (1) pour une bande transporteuse (2) circulant sans fin et contaminée par des résidus de produit de revêtement, avec au moins un premier rouleau (3) qui est prévu pour être disposé sous la bande transporteuse (2), de sorte que l'enveloppe du premier rouleau (3) soit en contact avec une course inférieure de la bande transporteuse (2), ainsi qu'avec une bande de nettoyage (5) circulant sans fin qui est disposée sous le premier rouleau (3),
dans lequel l'enveloppe du premier rouleau (3) est en contact avec une course supérieure de la bande de nettoyage (5), et dans lequel la bande de nettoyage (5) présente, lors d'un mouvement de transport sur la course supérieure, une direction de transport principale (6) et est disposée de sorte qu'elle soit inclinée dans la direction de transport principale (6) par rapport à un axe longitudinal du premier rouleau (3),
**caractérisé en ce que**
au moins un premier dispositif de distribution (13, 13') est prévu sur la bande de nettoyage (5) et/ou au-dessus de la bande de nettoyage (5), pour appliquer un premier solvant sur la bande de nettoyage (5) de sorte qu'il soit transporté au moyen du mouvement de transport de la bande de nettoyage (5) le long de la direction de transport principale (6) vers une zone dans laquelle la bande de nettoyage (5) est en contact avec le premier rouleau (3), et
dans lequel le premier rouleau (3) est conçu et disposé de sorte qu'il reçoive au moins partiellement, au moyen d'un mouvement de rotation, le premier solvant se trouvant sur la bande de nettoyage (5) et le délivre à la bande transporteuse (2).

2. Dispositif de nettoyage (1) selon la revendication 1, dans lequel
le mouvement de rotation du premier rouleau (3) est orienté de sorte que le premier rouleau (3) présente, dans la zone de contact avec la bande transporteuse (2), une vitesse tangentielle superficielle (3') qui est au moins proportionnellement orientée dans la même direction qu'une direction de translation (4) de la bande transporteuse (2) au niveau de sa course inférieure.

3. Dispositif de nettoyage (1) selon la revendication 1 ou 2, dans lequel
le premier solvant est sensiblement constitué d'un produit de revêtement, en particulier du vernis et/ou de la peinture et/ou de la teinture, et est en particulier constitué du produit de revêtement dont les résidus de produit de revêtement doivent être éliminés de la bande transporteuse (2).

4. Dispositif de nettoyage (1) selon l'une quelconque des revendications 1 à 3, dans lequel
au moins un premier élément de nettoyage (30), en particulier un premier racloir de nettoyage, est prévu pour un contact frottant avec la bande transporteuse (2) et est disposé, vu dans la direction de translation de la bande transporteuse (2) au niveau de la course inférieure, derrière le premier rouleau (3), pour racler au moins partiellement de la bande transporteuse (2) un premier solvant appliqué sur la bande transporteuse (2) au moyen du premier rouleau (3) et les résidus de produit de revêtement présents sur la bande transporteuse (2) et les guider de sortie qu'ils arrivent sur la bande de nettoyage (5).

5. Dispositif de nettoyage (1) selon la revendication 4, dans lequel
un dispositif de collecte, vu dans la direction de transport principale (6) de la bande de nettoyage (5), est disposé derrière le premier rouleau (3) et/ou le premier élément de nettoyage (30) et est conçu de manière à collecter une quantité de premier solvant et de résidus de produit de revêtement transportés par la bande de nettoyage, au moins en partie de la bande de nettoyage et à les diriger vers un premier réservoir.

6. Dispositif de nettoyage (1) selon la revendication 5, dans lequel
le dispositif de collecte présente au moins un racloir d'évacuation (9) et/ou un rouleau d'évacuation qui sont en contact frottant avec la bande de nettoyage (5), ainsi que, de préférence au moins un élément de guidage qui comprend en particulier un entonnoir (10) qui est disposé entre le racloir d'évacuation (9) et/ou le rouleau d'évacuation et le premier réservoir (11) pour guider le premier solvant et les résidus de produit de revêtement collectés par la bande de nettoyage (5) vers le premier réservoir (11).

7. Dispositif de nettoyage (1) selon la revendication 5 ou 6, dans lequel
le premier dispositif de distribution (13, 13') est connecté au premier réservoir (11) par l'intermédiaire d'un premier dispositif de pompe (23) et est conçu pour délivrer le premier solvant et de préférence des résidus de produit de revêtement du premier réservoir (11) sur la bande de nettoyage (5).

8. Dispositif de nettoyage (1) selon l'une quelconque des revendications précédentes, dans lequel
au moins un second rouleau (12) est prévu pour être disposé, vu dans la direction de translation de la bande transporteuse (2) au niveau de la course inférieure, derrière le premier rouleau (3) et sous la bande transporteuse, et une enveloppe du second rouleau (12) est conçue pour être en contact avec la course inférieure de la bande transporteuse (2), et dans lequel la bande de nettoyage (5) est également disposée sous le second rouleau (12) et l'enveloppe du second rouleau (12) est en contact avec la course supérieure de la bande de nettoyage (5), dans lequel le second rouleau (12) est disposé de sorte qu'il soit incliné dans un axe longitudinal par rapport à la direction de transport principale (6) de la bande de nettoyage (5),
et dans lequel un second dispositif de distribution (13") est prévu sur la bande de nettoyage et/ou au-dessus de la bande de nettoyage (5), pour déposer un second solvant sur la bande de nettoyage (5) de sorte qu'il soit transporté au moyen du mouvement de transport de la bande de nettoyage (5) le long de la direction de transport principale (6) vers une zone dans laquelle la bande de nettoyage (5) est en contact avec le second rouleau (12),
dans lequel le second rouleau (12) est conçu pour recevoir au moins partiellement, au moyen d'un mouvement de rotation, le second solvant se trouvant sur la bande de nettoyage (5) et le délivrer à la bande transporteuse (2), dans lequel le mouvement de rotation du second rouleau (12) est en particulier orienté en fonction du ou dans la direction opposée au mouvement de rotation du premier rouleau (3).

9. Dispositif de nettoyage selon la revendication 8, dans lequel
le second solvant est différent du premier solvant, en particulier dans lequel le second solvant comprend un produit de nettoyage.

10. Dispositif de nettoyage (1) selon la revendication 8 ou 9, dans lequel
un second élément de nettoyage (31), en particulier un second racloir de nettoyage, est prévu pour un contact frottant avec la bande transporteuse (2) et, vu dans la direction de translation de la bande transporteuse (2) au niveau de la course inférieure, est disposé derrière le second rouleau(12), pour racler de la bande transporteuse (2) au moins une quantité de second solvant fournie au moyen du second rouleau (12) et de préférence le premier solvant non raclé par le premier élément de nettoyage (30) et/ou des résidus de produit de revêtement de la bande transporteuse (2) et les guider de sorte qu'ils arrivent sur la bande de nettoyage (5).

11. Dispositif de nettoyage (1) au moins selon les revendications 5 et 8 et/ou 10, dans lequel
le dispositif de collecte, vu dans la direction de transport principale (6) de la bande de nettoyage (5), est disposé derrière le second rouleau (12) et/ou le second élément de nettoyage (31) et est conçu pour collecter une quantité de second solvant transporté par la bande de nettoyage (5), au moins en partie de la bande de nettoyage (5) et à les diriger vers un second réservoir.

12. Dispositif de nettoyage (1) au moins selon la revendication 11, dans lequel
le second dispositif de distribution (13") est connecté au second réservoir (18) par l'intermédiaire d'un second dispositif de pompe (23') pour transporter au moins le second solvant à partir du second réservoir (18) et le délivrer sur la bande de nettoyage (5).

13. Dispositif de nettoyage (1) selon l'une quelconque des revendications précédentes,
avec un rouleau de séchage (20) qui est prévu pour être disposé, vu dans la direction de translation de la bande transporteuse (2) au niveau de la course inférieure, derrière le premier rouleau (3) ou le second rouleau (12), sous la bande transporteuse (2), et une enveloppe du rouleau de séchage (20) est conçue pour un contact avec la course inférieure de la bande transporteuse (2) et dans lequel la bande de nettoyage (5) est également disposée sous le rouleau de séchage (20), dans lequel l'enveloppe du rouleau de séchage (20) est en contact avec la course supérieure de la bande de nettoyage (5), et dans lequel le rouleau de séchage (20) est conçu pour recevoir, au moyen d'un mouvement de rotation, au moins le second solvant se trouvant sur la bande transporteuse (2) et le délivrer à la bande de nettoyage (5).

14. Dispositif de revêtement avec une bande transporteuse (2) circulant sans fin pour recevoir au moins une pièce ainsi qu'avec au moins une unité de revêtement pour l'application superficielle d'un produit de revêtement sur la pièce, ainsi qu'avec un dispositif de nettoyage (1), en particulier selon au moins une quelconque des revendications 1 à 13, avec au moins un premier rouleau (3) qui est disposé sous la bande transporteuse (2) et son enveloppe est en contact avec une course inférieure de la bande transporteuse (2), ainsi qu'avec une bande de nettoyage (5) circulant sans fin qui est disposée sous le premier rouleau (3),
dans lequel l'enveloppe du premier rouleau (3) est en contact avec une course supérieure de la bande de nettoyage (5), et dans lequel la bande de nettoyage (5) présente, lors d'un mouvement de transport sur la course supérieure, une direction de transport principale (6) et est disposée de sorte qu'elle soit inclinée dans la direction de transport principale (6) par rapport à un axe longitudinal du premier rouleau (3), **caractérisé en ce que**
au moins un premier dispositif de distribution (13, 13') est prévu sur la bande de nettoyage (5) et/ou au-dessus de la bande de nettoyage (5), pour appliquer un premier solvant sur la bande de nettoyage (5) de sorte qu'il soit transporté au moyen d'un mouvement de transport de la bande de nettoyage (5) le long de la direction de transport principale (6) vers une zone dans laquelle la bande de nettoyage (5) est en contact avec le premier rouleau (3), et dans lequel le premier rouleau (3) est conçu et disposé de sorte qu'il reçoive au moins partiellement le solvant se trouvant sur la bande de nettoyage (5) au moyen d'un mouvement de rotation et le délivre à la bande transporteuse (2).

15. Procédé de nettoyage d'une bande transporteuse circulant sans fin et contaminée par des résidus de produit de revêtement, de préférence au moyen d'un dispositif de nettoyage (1) selon l'une quelconque des revendications 1 à 13,
dans lequel au moins un premier rouleau (3) est disposé sous la bande transporteuse (2) de sorte que l'enveloppe du premier rouleau (3) soit en contact avec une course inférieure de la bande transporteuse (2), ainsi qu'avec une bande de nettoyage (5) circulant sans fin qui est disposée sous le premier rouleau (3),
dans lequel la bande de nettoyage (5) est disposée sous le premier rouleau (3) de sorte que l'enveloppe du premier rouleau (3) soit en contact avec une course supérieure de la bande de nettoyage (5), dans lequel la bande de nettoyage (5) est inclinée dans une direction de transport principale (6) par rapport à un axe longitudinal du premier rouleau (3),
**caractérisé en ce que**
un solvant est appliqué sur la course supérieure de la bande de nettoyage (5) et est transporté au moyen d'un mouvement de transport de la bande de nettoyage (5) le long de la direction de transport principale (6) vers une zone dans laquelle la bande de nettoyage (5) est en contact avec le premier rouleau (3),
et dans lequel le premier rouleau (3) est décalé dans un mouvement de rotation pour recevoir le solvant se trouvant sur la bande de nettoyage (5) et le délivrer à la bande transporteuse (2).
